# EUROPEAN PATENT APPLICATION

(11) **EP 4 804 743 A1**
(43) Date of publication of application: **09.09.2026**
(21) Application number: 24920572.5
(22) Date of filing: 29.11.2024
(51) Int. Cl.: H05K 5/04, H05K 5/00, H04M 1/02, B22F 3/22, B22F 3/16

(54) **ELECTRONIC DEVICE COMPRISING FRAME AND MANUFACTURING METHOD THEREFOR**

(30) Priority: 23.01.2024 KR 20240010528; 14.02.2024 KR 20240021384
(71) Applicant: Samsung Electronics Co., Ltd., Suwon-si, Gyeonggi-do 16677 (KR)
(72) Inventor: LEE, Hosoon, Suwon-si Gyeonggi-do 16677 (KR); CHOI, Hyunsuk, Suwon-si Gyeonggi-do 16677 (KR)
(74) Representative: Gulde & Partner
(86) International application number: PCT/KR2024/019371
(87) International publication number: WO 2025/159321

(57) **Abstract**

This electronic device comprises a display and a housing assembly, wherein the housing assembly includes a rear cover and a frame attached to the rear cover. The frame includes: a peripheral part which is formed of a first metal material, and which includes an outer portion that defines the side surface of the electronic device and an inner portion that includes a recess; a porous part integrally formed with the recess of the peripheral part; and a bracket which supports the display and which is formed of a second metal material that differs from the first metal material. The bracket is integrally formed with the peripheral part and the porous part. A portion of the second metal material forming the bracket at least partially fills gaps between surfaces that define the porous part and the recess of the peripheral part, and at least partially fills pores included in the porous part.

## Description

### [Technical Field]

The present disclosure relates to an electronic device including a frame and a manufacturing method thereof.

### [Background Art]

An electronic device may include a housing assembly defining an exterior of the electronic device. The housing assembly may include a frame. The frame may include a bracket supporting components (e.g., a battery and a printed circuit board) disposed in the electronic device, and a peripheral part coupled to the bracket. The peripheral part may at least partially define a lateral side of the electronic device. In order to provide rigidity of the housing assembly, the frame and the bracket may include a metal material. For example, the metal material may include titanium, stainless steel, aluminum, and/or magnesium. The frame and the bracket may include different metals from each other.

The above-described information may be provided as a related art for a purpose of helping understanding of the present disclosure. No claim or determination is raised as to whether any of the above-described descriptions may be applied as a prior art related to the present disclosure.

### [Disclosure]

### [Technical Solution]

An electronic device is disclosed. The electronic device may include a display. The electronic device may include a housing assembly. The housing assembly may include a rear cover, and a frame attached with the rear cover. The frame may include a peripheral part, formed from a first metal material, including an outer portion defining a lateral side of the electronic device and an inner portion including a recess. The frame may include a porous part integrally formed with the recess of the peripheral part. The frame may include a bracket, supporting the display, formed from a second metal material different from the first metal material. The bracket may be integrally formed with the peripheral part and the porous part. A portion of the second metal material forming the bracket may at least partially fill a gap between the porous part and a surface defining the recess of the peripheral part, and may at least partially fill pores included in the porous part.

A method of manufacturing a frame of a housing assembly for use in an electronic device is disclosed. The method of manufacturing may include providing a peripheral part including a recess. The method of manufacturing may include disposing the peripheral part in a first mold. The method of manufacturing may include injecting, using the first mold, a mixture of first metal powders and binder into the recess of the peripheral part. The method of manufacturing may include, after injecting, separating, from the first mold, the peripheral part with the mixture disposed in the recess. The method of manufacturing may include, after separating, performing de-binding to remove the binder from the mixture disposed in the recess. The method of manufacturing may include, after de-binding is performed, performing sintering to crystallize the first metal powders to form a porous part including pores in the recess. A gap may be formed between the porous part and a surface defining the recess of the peripheral part by the de-binding and the sintering. The method of manufacturing may include disposing the peripheral part with the porous part formed in the recess in a second mold. The method of manufacturing may include die casting of molten second metal, using the second mold in which the frame is disposed, to form a bracket that includes a first portion included in the gap and a second portion included in the pores.

### [Description of the Drawings]

FIG. 1 is a block diagram of an electronic device in a network environment according to an embodiment.
FIG. 2 illustrates an electronic device according to an example embodiment.
FIG. 3 is an exploded perspective view of an electronic device according to an example embodiment.
FIG. 4A illustrates an example of a housing assembly of an electronic device including a frame.
FIG. 4B illustrates a frame according to an example embodiment.
FIG. 4C illustrates a bracket according to an example embodiment.
FIG. 5 illustrates an example of a cross-sectional view in which the housing assembly of FIG. 4A is cut along line A-A'.
FIG. 6 is a flow chart illustrating an example of a process of manufacturing a frame.
FIG. 7 illustrates a body of a peripheral part.
FIG. 8A illustrates a first mold for forming a porous part.
FIGS. 8B and 8C illustrate peripheral parts including a porous part metal injection molded using a first mold.
FIG. 9 illustrates a peripheral part in a process in which a de-binding process and a sintering process are performed after forming a porous part.
FIG. 10A illustrates a second mold for forming a bracket.
FIGS. 10B and 10C illustrate frames including a bracket formed using a second mold.
FIG. 11A illustrates a housing assembly in which a frame and a bracket are formed.
FIG. 11B illustrates a housing assembly in which a resin is injected into a frame.
FIG. 11C illustrates a housing assembly of a final product obtained by processing a shape of the housing assembly of FIG. 11B.
FIG. 12 illustrates a manufacturing process of a frame manufactured in a state in which a first surface of a recess is positioned perpendicular to a gravity direction.
FIG. 13 illustrates a manufacturing process of a frame in which a porous part is manufactured to have roughness in a state in which a first surface of a recess is positioned perpendicular to a gravity direction.
FIG. 14 illustrates a manufacturing process of a frame manufactured in a state in which a first surface of a recess is positioned parallel to a gravity direction.
FIG. 15 illustrates a manufacturing process of a frame in which a porous part is manufactured to have roughness in a state in which a first surface of a recess is positioned parallel to a gravity direction.

### [Mode for Invention]

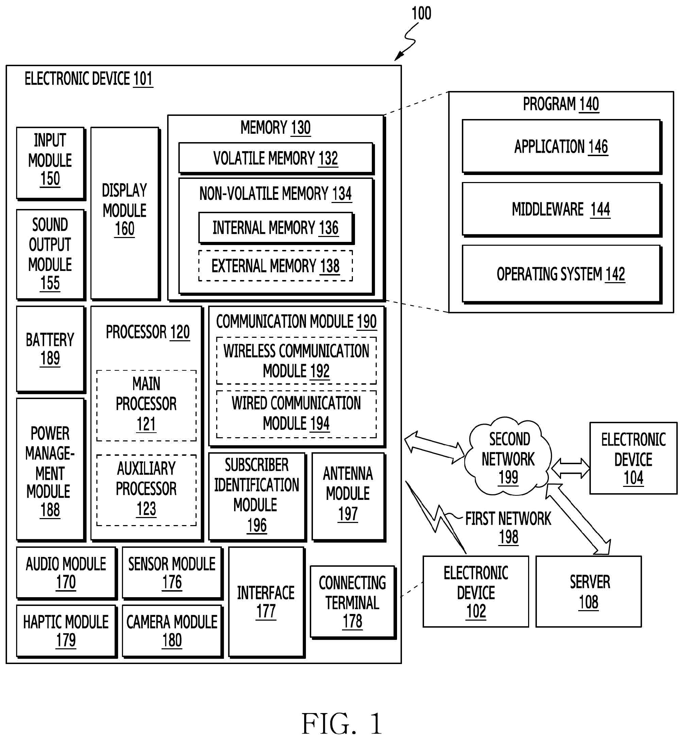

FIG. 1 is a block diagram illustrating an electronic device 101 in a network environment 100 according to an embodiment.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a lateral side) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

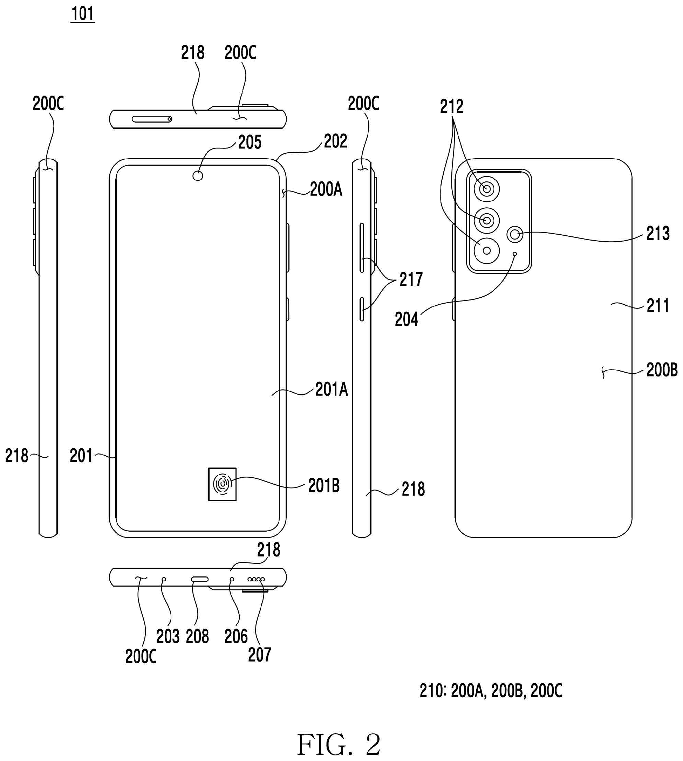

FIG. 2 illustrates an electronic device according to an example embodiment.

Referring to FIG. 2, an electronic device 101 according to an example embodiment may include a housing assembly 210 forming an exterior of the electronic device 101. For example, the housing assembly 210 may include a first surface (or a front surface) 200A, a second surface (or a rear surface) 200B, and a third surface (or a lateral side) 200C surrounding a space between the first surface 200A and the second surface 200B.

The electronic device 101 according to an example embodiment may include a substantially transparent cover plate 202. According to an example embodiment, the cover plate 202 may form at least a portion of the first surface 200A. According to an example embodiment, the cover plate 202 may include, for example, a glass plate, or a polymer plate including various coating layers, but is not limited thereto.

The electronic device 101 according to an example embodiment may include a substantially opaque rear cover 211. According to an example embodiment, the rear cover 211 may form at least a portion of the second surface 200B. According to an example embodiment, the rear cover 211 may be formed of coated or colored glass, ceramic, polymer, metal (e.g., aluminum, stainless steel (STS), or magnesium), or a combination of at least two of the materials.

The electronic device 101 according to an example embodiment may include a periphery part 218. According to an example embodiment, the periphery part 218 may be attached (or coupled) with the rear cover 211 to form at least a portion of the third surface 200C of the electronic device 101. For example, the periphery part 218 may form the entire third surface 200C of the electronic device 101. For example, the periphery part 218 may form the third surface 200C of the electronic device 101 together with the cover plate 202 and/or the rear cover 211.

The electronic device 101 according to an example embodiment may include at least one of a display 201, an audio module 203, 204, and 207, a sensor module (not illustrated), camera modules 205, 212, and 213, a key input device 217, a light emitting element (not illustrated), and/or a connector hole 208. According to an example embodiment, the electronic device 101 may omit at least one (e.g., the key input device 217 or the light emitting element (not illustrated)) of the components or additionally include another component.

According to an example embodiment, at least a portion of the display 201 (e.g., the display module 160 of FIG. 1) may be visible through the cover plate 202 forming the first surface 200A. According to an example embodiment, the display 201 may be disposed on a back surface of the cover plate 202.

According to an example embodiment, an outer shape of the display 201 may be formed to be substantially the same as an outer shape of the cover plate 202 adjacent to the display 201. According to an example embodiment, in order to expand an area in which the display 201 is visually exposed, a gap between an outer edge of the display 201 and an outer edge of the cover plate 202 may be formed to be substantially the same.

According to an example embodiment, the display 201 (or the first surface 200A of the electronic device 101) may include a screen display area 201A. According to an example embodiment, the display 201 may provide visual information to a user through the screen display area 201A. In the illustrated embodiment, when the first surface 200A is viewed from the front, the screen display area 201A is illustrated as being spaced apart from an outer edge of the first surface 200A and positioned on an inner side of the first surface 200A, but is not limited thereto. According to an example embodiment, when the first surface 200A is viewed from the front, at least a portion of an edge of the screen display area 201A may substantially coincide with an edge of the first surface 200A (or the cover plate 202).

According to an example embodiment, the screen display area 201A may include a sensing area 201B configured to obtain biometric information of the user. Herein, the expression "the screen display area 201A includes the sensing area 201B" may be understood to mean that at least a portion of the sensing area 201B may be overlapped with the screen display area 201A. For example, the sensing area 201B may refer to an area capable of displaying visual information by the display 201 like another area of the screen display area 201A, and may additionally refer to an area capable of obtaining biometric information (e.g., a fingerprint) of the user. According to an example embodiment, the sensing area 201B may be formed in the key input device 217.

According to an example embodiment, the display 201 may include an area in which a first camera module 205 (e.g., the camera module 180 of FIG. 1) is positioned. According to an example embodiment, an opening may be formed in the area of the display 201, and the first camera module 205 (e.g., a punch-hole camera) may be at least partially disposed in the opening to face the first surface 200A. In this case, the screen display area 201A may surround at least a portion of an edge of the opening. According to an example embodiment, the first camera module 205 (e.g., an under display camera (UDC)) may be disposed below the display 201 to overlap with the area of the display 201. In this case, the display 201 may provide visual information to the user through the area, and additionally, the first camera module 205 may obtain an image corresponding to a direction toward the first surface 200A through the area of the display 201.

According to an example embodiment, the display 201 may be coupled with or disposed adjacent to touch sensing circuitry, a pressure sensor capable of measuring intensity (pressure) of a touch, and/or a digitizer detecting a magnetic field type stylus pen.

According to an example embodiment, the audio module 203, 204, and 207 (e.g., the audio module 170 of FIG. 1) may include microphone holes 203 and 204 and/or a speaker hole 207.

According to an example embodiment, the microphone holes 203 and 204 may include a first microphone hole 203 formed in a partial area of the third surface 200C and/or a second microphone hole 204 formed in a partial area of the second surface 200B. A microphone (not illustrated) for obtaining external sound may be disposed inside the microphone holes 203 and 204. The microphone may include a plurality of microphones to detect a direction of sound.

According to an example embodiment, the second microphone hole 204 formed in the partial area of the second surface 200B may be disposed adjacent to the camera modules 205, 212, and 213. For example, the second microphone hole 204 may obtain sound according to an operation of the camera modules 205, 212, and 213. However, it is not limited thereto.

According to an example embodiment, the speaker hole 207 may include an external speaker hole 207 and a receiver hole for calls (not illustrated). The external speaker hole 207 may be formed in a portion of the third surface 200C of the electronic device 101. According to an example embodiment, the external speaker hole 207 may be implemented as one hole together with the microphone hole 203. Although not illustrated, the receiver hole for calls (not illustrated) may be formed in another portion of the third surface 200C. For example, the receiver hole for calls may be formed on an opposite side of the external speaker hole 207 on the third surface 200C. For example, based on the illustration of FIG. 2, the external speaker hole 207 may be formed on the third surface 200C corresponding to a lower end portion of the electronic device 101, and the receiver hole for calls may be formed on the third surface 200C corresponding to an upper end portion of the electronic device 101. However, it is not limited thereto, and according to an example embodiment, the receiver hole for calls may be formed at a position other than the third surface 200C. For example, the receiver hole for calls may be formed by a separated space between the cover plate 202 (or the display 201) and the periphery part 218.

According to an example embodiment, the electronic device 101 may include at least one speaker (not illustrated) configured to output sound to an outside of the housing assembly 210 through the external speaker hole 207 and/or the receiver hole for calls (not illustrated).

According to an example embodiment, the sensor module (not illustrated) (e.g., the sensor module 176 of FIG. 1) may generate an electrical signal or a data value corresponding to an operating state inside the electronic device 101 or an environmental state outside the electronic device 101. For example, the sensor module may include at least one of a proximity sensor, an HRM sensor, a fingerprint sensor, a gesture sensor, a gyro sensor, a barometric pressure sensor, a magnetic sensor, an acceleration sensor, a grip sensor, a color sensor, an infrared (IR) sensor, a biometric sensor, a temperature sensor, a humidity sensor, or an illuminance sensor.

According to an example embodiment, the camera modules 205, 212, and 213 (e.g., the camera module 180 of FIG. 1) may include a first camera module 205 disposed to face the first surface 200A of the electronic device 101, a second camera module 212 disposed to face the second surface 200B, and a flash 213.

According to an example embodiment, the second camera module 212 may include a plurality of cameras (e.g., a dual camera, a triple camera, or a quad camera). However, the second camera module 212 is not necessarily limited to including a plurality of cameras, and may include one camera.

According to an example embodiment, the first camera module 205 and the second camera module 212 may include one or a plurality of lenses, an image sensor, and/or an image signal processor.

According to an example embodiment, the flash 213 may include, for example, a light emitting diode or a xenon lamp. According to an example embodiment, two or more lenses (an infrared camera, wide-angle lens, and telephoto lens) and image sensors may be disposed on one surface of the electronic device 101.

According to an example embodiment, the key input device 217 (e.g., the input module 150 of FIG. 1) may be disposed on the third surface 200C of the electronic device 101. According to an example embodiment, the electronic device 101 may not include some or all of the key input device 217, and the key input device 217 that is excluded may be implemented in another form, such as a soft key, on the display 201.

According to an example embodiment, the connector hole 208 may be formed on the third surface 200C of the electronic device 101 so that a connector of an external device may be accommodated. A connecting terminal (e.g., the connecting terminal 178 of FIG. 1) electrically connected to the connector of the external device may be disposed in the connector hole 208. The electronic device 101 according to an example embodiment may include an interface module (e.g., the interface 177 of FIG. 1) for processing an electrical signal transmitted and received through the connecting terminal.

According to an example embodiment, the periphery part 218 may include a vent hole 206. For example, air outside the housing assembly 210 may be introduced into the housing assembly 210 through the vent hole 206. For example, air inside the housing assembly 210 may be discharged to the outside of the housing assembly 210 through the vent hole 206. A position of the vent hole 206 is not limited to the position illustrated in FIG. 2.

According to an example embodiment, the electronic device 101 may include a light emitting element (not illustrated). For example, the light emitting element (not illustrated) may be disposed on the first surface 200A of the housing assembly 210. The light emitting element (not illustrated) may provide state information of the electronic device 101 in a form of light. According to an example embodiment, the light emitting element (not illustrated) may provide a light source linked with operation of the first camera module 205. For example, the light emitting element (not illustrated) may include an LED, an IR LED, and/or a xenon lamp.

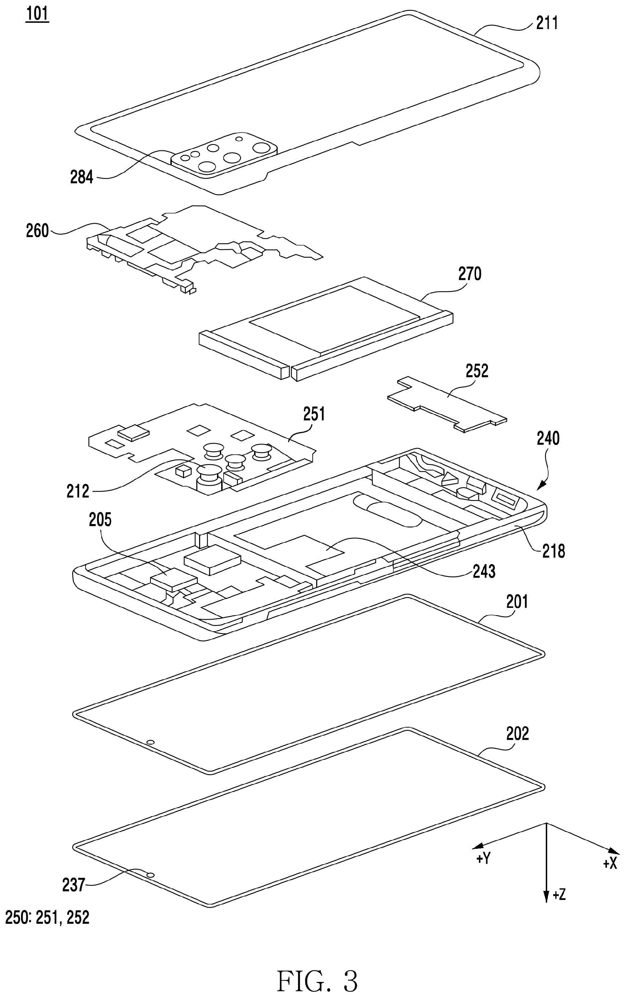

FIG. 3 is an exploded perspective view of an electronic device according to an example embodiment.

Hereinafter, overlapping descriptions of configurations having the same reference numerals as the above-described configurations are omitted.

Referring to FIG. 3, an electronic device 101 according to an example embodiment may include a frame 240 including a peripheral part 218 and a bracket 243, a printed circuit board 250, a supporting member 260, and/or a battery 270. The printed circuit board 250 may include a first printed circuit board 251, which is a main board, and a second printed circuit board 252, which is a sub-board.

The electronic device 101 according to an example embodiment may include the frame 240 that defines an exterior (e.g., the third surface 200C of FIG. 2) of the electronic device 101. The frame 240 may include the peripheral part 218 defining a lateral side of the electronic device 101 and the bracket 243 extending from the peripheral part 218 to an inner side. According to an example embodiment, the peripheral part 218 and the bracket 243 may be disposed between a display 201 and a rear cover 211. For example, the peripheral part 218 may surround a space between the rear cover 211 and a cover plate 202 (and/or the display 201). For example, the bracket 243 may extend from the peripheral part 218 in the space. The bracket 243 may be integrally formed with the peripheral part 218.

According to an example embodiment, the bracket 243 may support or accommodate components included in the electronic device 101. For example, the display 201 may be disposed on a surface of the bracket 243 facing a direction (e.g., a +z direction). The display 201 may be supported by the bracket 243. For example, the first printed circuit board 251, the second printed circuit board 252, the battery 270, and a second camera module 212 may be disposed on another surface of the bracket 243 facing an opposite direction (e.g., a -z direction) to the direction. For example, each of the first printed circuit board 251, the second printed circuit board 252, the battery 270, and the second camera module 212 may be seated in a recess defined by the peripheral part 218 and/or the bracket 243.

According to an example embodiment, each of the first printed circuit board 251, the second printed circuit board 252, and the battery 270 may be coupled with the bracket 243. For example, the first printed circuit board 251 and the second printed circuit board 252 may be fixed to the bracket 243 through a coupling member such as a screw. For example, the battery 270 may be fixed to the bracket 243 through an adhesive member (e.g., a double-sided tape). However, embodiments of the present disclosure are not limited by the above-described example.

According to an example embodiment, the supporting member 260 may be disposed between the first printed circuit board 251 and the rear cover 211. According to an example embodiment, the supporting member 260 may be disposed on the first printed circuit board 251. For example, the supporting member 260 may be disposed on a surface of the first printed circuit board 251 facing the -z direction.

According to an example embodiment, the supporting member 260 may at least partially overlap the first printed circuit board 251 with respect to a z-axis. The supporting member 260 may cover at least a partial region of the first printed circuit board 251. The supporting member 260 may protect the first printed circuit board 251 from a physical impact or prevent detachment of connectors coupled to the first printed circuit board 251.

According to an example embodiment, the supporting member 260 may be fixed to the first printed circuit board 251 through a coupling member (e.g., a screw), or may be coupled to the bracket 243 together with the first printed circuit board 251 through the coupling member.

According to an example embodiment, the display 201 may be disposed between the bracket 243 and the cover plate 202. For example, the cover plate 202 may be disposed on a side of the display 201 (e.g., in the +z direction), and the bracket 243 may be disposed on another side (e.g., in the -z direction).

According to an example embodiment, the cover plate 202 may be coupled with the display 201. For example, the cover plate 202 and the display 201 may be adhered to each other through an optical adhesive member (e.g., an optically clear adhesive (OCA) or an optically clear resin (OCR)) interposed therebetween. The cover plate 202 may include a substantially transparent window.

According to an example embodiment, the cover plate 202 may be coupled (or attached) with the peripheral part 218. For example, the cover plate 202 may include, when viewed in a z-axis direction, an outer portion extending outside the display 201, and may be attached with the peripheral part 218 through an adhesive member (e.g., a waterproof tape) disposed between the outer portion of the cover plate 202 and the peripheral part 218. However, it is not limited by the above-described example.

According to an example embodiment, a processor (e.g., the processor 120 of FIG. 1), memory (e.g., the memory 130 of FIG. 1), and/or an interface (e.g., the interface 177 of FIG. 1) may be disposed on the first printed circuit board 251 and/or the second printed circuit board 252. The processor may include, for example, one or more of a central processing unit, an application processor, a graphic processing unit, an image signal processor, a sensor hub processor, or a communication processor. The memory may include, for example, a volatile memory or a non-volatile memory. The interface may include, for example, a high definition multimedia interface (HDMI), a universal serial bus (USB) interface, an SD card interface, and/or an audio interface. The interface may electrically or physically connect the electronic device 101 with an external electronic device, and may include a USB connector, an SD card/MMC connector, or an audio connector. According to an example embodiment, the first printed circuit board 251 and the second printed circuit board 252 may be operatively or electrically connected to each other through a connection member (e.g., a flexible printed circuit board).

According to an example embodiment, the battery 270 (e.g., the battery 189 of FIG. 1) may supply power to at least one component of the electronic device 101. For example, the battery 270 may include a rechargeable secondary battery or a fuel cell. At least a portion of the battery 270 may be disposed on substantially the same plane as the first printed circuit board 251 and/or the second printed circuit board 252.

The electronic device 101 according to an example embodiment may include an antenna module (not illustrated) (e.g., the antenna module 197 of FIG. 1). According to an example embodiment, the antenna module may be disposed between the rear cover 211 and the battery 270. The antenna module may include, for example, a near field communication (NFC) antenna, a wireless charging antenna, and/or a magnetic secure transmission (MST) antenna. The antenna module may perform, for example, short-range communication with an external device, or may wirelessly transmit and receive power to and from an external device.

According to an example embodiment, a first camera module 205 (e.g., a front camera) may be disposed in at least a portion of the bracket 243 such that a lens may receive external light through a partial region (e.g., a camera region 237) of the cover plate 202 (e.g., the front surface 200A of FIG. 2).

According to an example embodiment, the second camera module 212 (e.g., a rear camera) may be disposed between the bracket 243 and the rear cover 211. According to an example embodiment, the second camera module 212 may be electrically connected to the first printed circuit board 251 through a connection member (e.g., a connector). According to an example embodiment, the second camera module 212 may be disposed such that a lens may receive external light through a camera region 284 of the rear cover 211 of the electronic device 101.

According to an example embodiment, the camera region 284 may be formed on a surface (e.g., the rear surface 200B of FIG. 2) of the rear cover 211. According to an example embodiment, the camera region 284 may be formed to be at least partially transparent such that external light may be incident on the lens of the second camera module 212. According to an example embodiment, at least a portion of the camera region 284 may protrude from the surface of the rear cover 211 by a predetermined height. However, it is not limited thereto, and according to an example embodiment, the camera region 284 may also form substantially the same plane as the surface of the rear cover 211.

According to an example embodiment, a housing assembly 210 of the electronic device 101 may mean a configuration or a structure forming at least a portion of the exterior of the electronic device 101. In this respect, at least a portion of the cover plate 202, the peripheral part 218, the bracket 243, and/or the rear cover 211 forming the exterior of the electronic device 101 may be referred to as the housing assembly 210 of the electronic device 101.

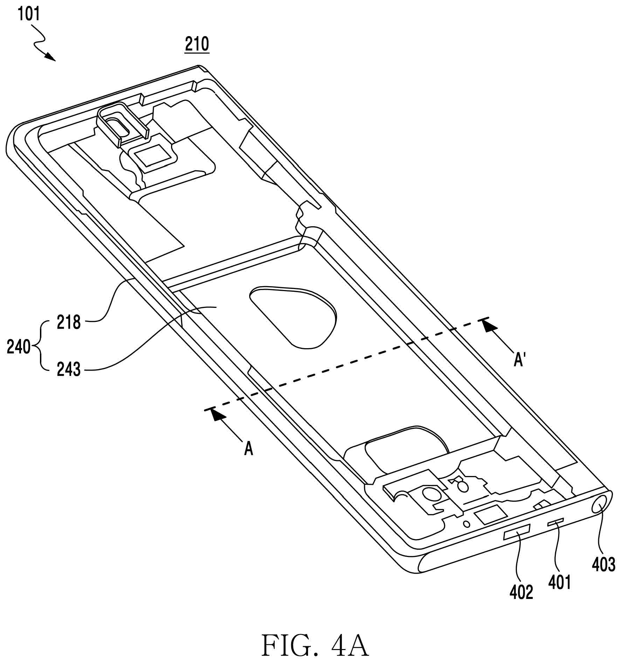

The electronic device 101 to be described later may include a housing assembly (e.g., a housing assembly 210 of FIG. 4A) including heterogeneous metals. According to an example embodiment, the peripheral part 218 may include a first metal, and the bracket 243 may include a second metal. In examples to be described later, the first metal is described as titanium, and the second metal is described as aluminum, but are not limited thereto.

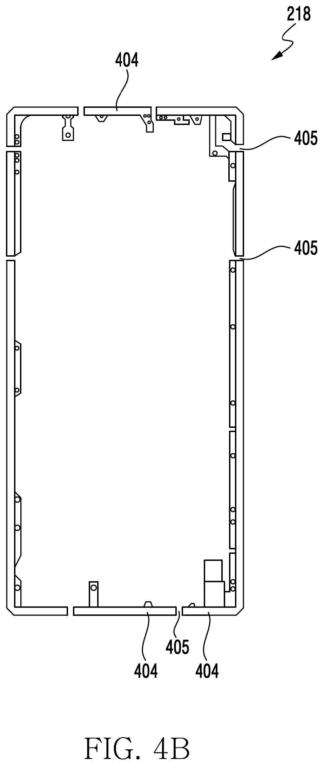

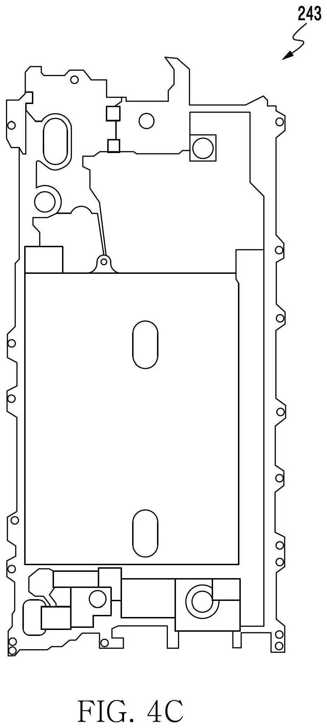

FIG. 4A illustrates an example of a housing assembly of an electronic device including a frame. FIG. 4B illustrates a peripheral part according to an example embodiment. FIG. 4C illustrates a bracket according to an example embodiment.

Referring to FIG. 4A, an electronic device 101 according to an example embodiment may include a housing assembly 210 defining an exterior of the electronic device 101. The housing assembly 210 may include a frame 240. The frame 240 may include a peripheral part 218 that at least partially forms a lateral side of the electronic device 101 and a bracket 243 that supports electronic components and/or a display (e.g., the display 201 of FIG. 3).

According to an example embodiment, the peripheral part 218 may define at least a portion of the lateral side of the electronic device 101. For example, the peripheral part 218 may be attached with a cover plate (e.g., the cover plate 202 of FIG. 3) that at least partially defines a front surface of the electronic device 101 and a rear cover (e.g., the rear cover 211 of FIG. 3) that at least partially defines a rear surface of the electronic device 101. By surrounding a space between the cover plate and the rear cover, the peripheral part 218 may form an inner space of the electronic device 101 together with the cover plate and the rear cover. For example, the peripheral part 218 may include a speaker hole 401 for providing an audio signal to the outside of the electronic device 101, a connector hole 402 for coupling a connector of an external electronic device, and/or a hole 403 that may accommodate an electronic pen (e.g., a stylus pen). The peripheral part 218 may be referred to as a side bezel or a side structure in terms of forming the lateral side of the electronic device 101.

According to an example embodiment, the bracket 243 may be configured to support components of the electronic device 101. For example, electronic components such as a printed circuit board (e.g., the printed circuit board 250 of FIG. 3), a battery (e.g., the battery 270 of FIG. 3), and a camera (e.g., the second camera module 212 of FIG. 3) may be supported by the bracket 243 by being disposed on the bracket 243. According to an example embodiment, the bracket 243 may be at least partially surrounded by the peripheral part 218. The bracket 243 may be coupled to an inner surface of the peripheral part 218. The bracket 243 may be referred to as a supporting member, a supporting portion, or a supporting plate in terms of supporting components of the electronic device 101. The bracket 243 may be integrally formed with the peripheral part 218.

According to an example embodiment, each of the peripheral part 218 and the bracket 243 may be manufactured by a separate process. Referring to FIG. 4B, the peripheral part 218 may have a substantially quadrangular ring shape including an empty space therein. At least a portion of the peripheral part 218 may include one or more conductive portions 404 to operate as an antenna radiator used for communication with an external electronic device. When the one or more conductive portions 404 operate as an antenna radiator, a resonant frequency of a signal transmitted and/or received through the one or more conductive portions 404 may be determined based on an electrical length of the one or more conductive portions 404. For example, when a wavelength corresponding to the resonance frequency of the signal is w, an electrical length of the one or more conductive portions 404 for transmitting and/or receiving the signal with the resonance frequency may be w/4 to w/2. In order to adjust the electrical length of the one or more conductive portions 404, the peripheral part 218 may include a slot 405 (or a slit). By being filled with a non-conductive material, the slot 405 (or the slit) may determine the electrical length of the one or more conductive portions 404 operating as the antenna radiator and electrically separate the one or more conductive portions 404 from another conductive portion.

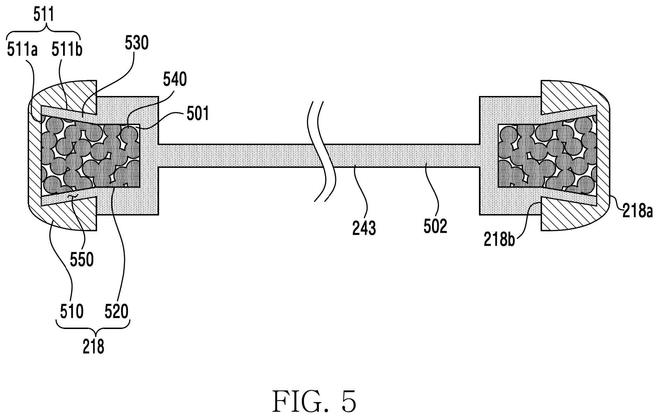

According to an example embodiment, since the peripheral part 218 defines at least partially the lateral side of the electronic device 101, it may be exposed to the outside of the electronic device 101. A portion of the peripheral part 218 exposed to the outside of the electronic device 101 may be referred to as an outer portion (e.g., an outer portion 218a of FIG. 5), and a portion of the peripheral part 218 positioned inside the electronic device 101 and not exposed to the outside of the electronic device 101 may be referred to as an inner portion (e.g., an inner portion 218b of FIG. 5).

Since the outer portion (or an outer surface) of the peripheral part 218 is exposed to the outside of the electronic device 101, it may be required to have a relatively high strength, hardness, and excellent surface characteristics to protect components of the electronic device 101 from an external impact. In a case that strength of the peripheral part 218 is low, as the electronic device 101 is easily damaged by an external impact, damage to internal electronic components may be caused. In a case that surface characteristics of the peripheral part 218 are poor, as the peripheral part 218 is easily corroded, surface quality of the electronic device 101 may be deteriorated. For high strength and excellent surface characteristics, the peripheral part 218 may include a first metal material having high strength and excellent surface characteristics. The peripheral part 218 may be manufactured by metal injection molding (MIM) first metal powders and binder into a mold with a cavity having a shape of the peripheral part 218. For example, the first metal material may comprise titanium and/or stainless steel having high strength and excellent corrosion resistance. However, it is not limited thereto.

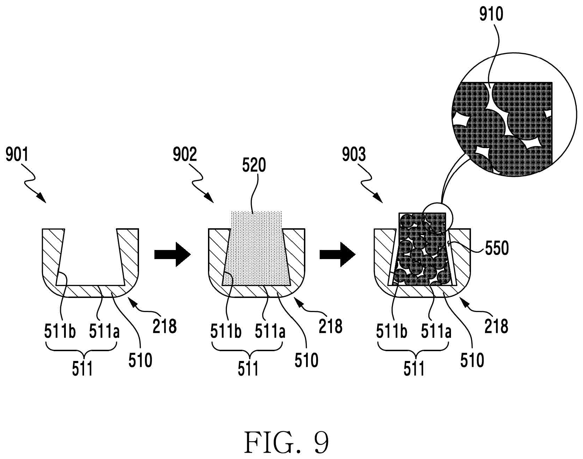

Referring to FIG. 4C, the bracket 243 may be coupled to an inner portion (e.g., the inner portion 218b of FIG. 5) of a peripheral part (e.g., the peripheral part 218 of FIG. 4B). The bracket 243 may be integrally formed with the peripheral part 218 through a manufacturing method to be described later. For example, a portion of a second metal material forming the bracket 243 may at least partially fill a gap between a porous part (e.g., a porous part 520 of FIG. 5) and a surface (e.g., a first surface 511a and a second surface 511b of FIG. 5) defining a recess (e.g., a recess 511 of FIG. 5) of the peripheral part 218, and at least partially fill pores (e.g., pores 910 of FIG. 9) included in the porous part 520.

Since the bracket 243 supports electronic components, the bracket 243 may be required to have relatively high strength. In a case that the bracket 243 is manufactured from substantially the same metal material as the first metal material forming the peripheral part 218, a total weight of the electronic device 101 may become too heavy. For example, in a case that the bracket 243 is manufactured from titanium, the same as the peripheral part 218, a total weight of the electronic device 101 may be increased. Since density (e.g., approximately 4.5 g/cm3) of titanium is lower than that of a metal material such as iron and stainless steel, but higher than density (e.g., approximately 2.7 g/cm3) of aluminum, a weight increase of the electronic device 101 may be caused by the relatively high density of titanium. In a case that a weight of the electronic device 101 is too heavy, a problem that portability of the electronic device 101 is deteriorated may be caused.

According to an example embodiment, the bracket 243 may be formed from a metal material (e.g., the second metal material) different from a metal material (e.g., the first metal material) forming the peripheral part 218. For example, the bracket 243 may include the second metal material relatively lighter than the first metal material included in the peripheral part 218. For example, density of the second metal material may be less than density of the first metal material. For example, specific gravity of the second metal material may be less than specific gravity of the first metal material.

Unlike the peripheral part 218, the bracket 243 surrounded by the peripheral part 218 may be disposed inside the electronic device 101 by being at least partially surrounded by the peripheral part 218 without being exposed to the outside of the electronic device 101. Since the bracket 243 is disposed inside the electronic device 101, the bracket 243 may have a small effect on rigidity of the electronic device 101 even when having lower strength than the peripheral part 218. According to an example embodiment, the second metal material may include aluminum and/or magnesium, which are relatively lighter than the first metal material (e.g., titanium). However, it is not limited thereto. Since density of aluminum is lower than density of titanium, the electronic device 101 including the bracket 243 including the aluminum may be lighter than the electronic device 101 including the bracket 243 including the titanium.

According to an example embodiment, the peripheral part 218 and the bracket 243 may be manufactured by a separate process. Coupling strength between the peripheral part 218 and the bracket 243 may require coupling strength of a level that is not easily separated by an external impact. For example, the coupling strength between the peripheral part 218 and the bracket 243 may be required to be approximately 10 Mpa or more.

A manufacturing method of the frame 240 including the peripheral part 218 and the bracket 243 may vary. For example, after separately manufacturing the peripheral part 218 and the bracket 243, respectively, a process of welding the bracket 243 to the peripheral part 218 may be probable. A process of welding heterogeneous metals may include Laser Welding, Electron-Beam Welding, and/or Friction Stir Welding. In a case of the process of coupling the peripheral part 218 and the bracket 243 by welding, bubbles may be generated inside the peripheral part 218 and/or the bracket 243 during the welding process. For example, in a case that a difference in melting points between the first metal material included in the peripheral part 218 and the second metal material included in the bracket 243 is large, the welding process may be performed at a temperature equal to or higher than a higher melting point. In this case, the temperature at which the welding process is performed may cause vaporization of a metal material having a lower melting point. As the metal material including the relatively low melting point is vaporized, a gas may be generated. The gas may cause generation of bubbles therein during the welding process. For example, in a case that the first metal material is titanium and the second metal material is aluminum, a melting point of the titanium is approximately 1,668°C, and a melting point of the aluminum is approximately 660°C. Since a welding process may be performed at a temperature equal to or higher than the melting point (e.g., approximately 1,668°C) of the titanium, the temperature at which the welding process is performed may be too high compared to the melting point of the aluminum. Due to the high temperature, the aluminum may generate a gas by being vaporized, and bubbles may be generated by the gas. Due to the generation of bubbles, an irregular coupling surface may be formed. In a case that the coupling surface is irregular, weakening of coupling strength may be caused. In addition, since an additional welding process is required after manufacturing the peripheral part 218 and the bracket 243, respectively, in a case of a welding process, an increase in manufacturing time and manufacturing cost may be caused.

A die casting process may be probable, as a coupling process between the peripheral part 218 and the bracket 243. When the die casting process is used, the bracket 243 coupled to the peripheral part 218 may be formed by casting the second metal material forming the bracket 243 in an inner side of the peripheral part 218. In a case that the peripheral part 218 and the bracket 243 include different metal materials, a coupling force between the peripheral part 218 and the bracket 243 may be weak due to a difference in physical characteristics and a difference in chemical characteristics between the heterogeneous metals. In order to improve the coupling force between the heterogeneous metals (e.g., titanium and aluminum), a special treatment may be required on a coupling surface. For example, by adjusting roughness of the inner surface of the peripheral part 218 using a method such as Laser Hatching, Blasting, and the like, a concavo-convex portion may be formed, and by penetrating aluminum into the concavo-convex portion, the bracket 243 may be coupled to the peripheral part 218. When the process is used, since a process for forming a concavo-convex portion at a temperature equal to or higher than the melting point (e.g., approximately 1,668°C) of titanium may be required, there may be difficulty in controlling the temperature at which the process is performed.

According to an example embodiment, a recess (e.g., the recess 511 of FIG. 5) for coupling the bracket 243 may be formed in the inner side of the peripheral part 218, and a porous part (e.g., the porous part 520 of FIG. 5) including the first metal material may be formed in the recess 511. The porous part may include pores. After the porous part is formed, the bracket 243 coupled to the peripheral part 218 may be formed by die casting the second metal material such that the second metal material penetrates into the pores of the porous part. When the process is used, the problem of generating bubbles caused by the welding process may be solved. When the bracket 243 is formed by the die casting, as the second metal material naturally penetrates into the pores of the porous part, the bracket 243 coupled to the inner side of the peripheral part 218 may be formed. The bracket 243 coupled to the inner side of the peripheral part 218 may be integrally formed with the peripheral part 218 through a manufacturing method to be described later.

FIG. 5 illustrates an example of a cross-sectional view in which the housing assembly of FIG. 4A is cut along line A-A'.

Referring to FIG. 5, a frame 240 may include a peripheral part 218, a porous part 520, and a bracket 243. The peripheral part 218 may include an outer portion 218a and an inner portion 218b. The inner portion 218b may include a recess 511.

According to an example embodiment, the peripheral part 218 may be formed from a first metal material 501. As described above, since the outer portion 218a (e.g., an outer surface) of the peripheral part 218 that at least partially forms an outer surface of an electronic device 101 is exposed to the outside of the electronic device 101, the first metal material 501 may include titanium having a relatively high strength. However, the titanium is described as merely an example, and the first metal material 501 is not limited to the titanium.

According to an example embodiment, the outer portion 218a of the peripheral part 218 may correspond to a portion of a body 510 of the peripheral part 218, which is exposed to the outside of an electronic device (e.g., the electronic device 101 of FIG. 2). The inner portion 218b of the peripheral part 218 may correspond to another portion of the body 510 of the peripheral part 218, which is not exposed to the outside. An outer surface of the body 510 facing the outside may be referred to as the outer portion 218a, and an inner surface of the body 510 facing the inside of the electronic device 101 may be referred to as the inner portion 218b.

According to an example embodiment, the recess 511 may be included in the inner portion 218b corresponding to the inner surface of the body 510. For example, as a portion of the inner portion 218b of the peripheral part 218 is removed through computerized numerical control (CNC) processing, the recess 511 may be formed. The peripheral part 218 may be coupled with the bracket 243 through the porous part 520 integrally formed with the recess 511. In order to improve a coupling force between the peripheral part 218 and the recess 511 including different metals, the recess 511 may be implemented in a form of an undercut, but is not limited thereto.

According to an example embodiment, the recess 511 may be defined by a first surface 511a of the peripheral part 218 and a second surface 511b of the peripheral part 218. The first surface 511a and the second surface 511b may be a portion of the inner portion 218b of the peripheral part 218. For example, the first surface 511a, which is a surface of the recess 511 facing an inner side of the peripheral part 218, may form a bottom surface of the recess 511, when the recess 511 is viewed from above. For example, the second surface 511b, which is a surface of the recess 511 extending from the first surface 511a toward the inner side, may form a lateral side of the recess 511, when the recess 511 is viewed from above. For example, in a case that the recess 511 is implemented in a form of an undercut, the second surface 511b may be extended to have an inclination with respect to the first surface 511a.

According to an example embodiment, the porous part 520 may be included in the recess 511. The porous part 520 may be integrally formed with the recess 511 of the peripheral part 218 and may include the first metal material 501. The porous part 520 integrally formed with the recess 511 may be formed by metal injection molding a first metal material in the recess 511. For example, by metal injection molding a mixture of first metal powders and binder for forming the porous part 520 in the recess 511, the porous part 520 integrally formed with the recess 511 may be formed. The first metal powders forming the porous part 520 may be contracted by a de-binding process and a sintering process. Due to the contraction, a gap 550 may be formed between the porous part 520 and the recess 511. For example, as the porous part 520 is coupled on the first surface 511a and spaced apart from the second surface 511b, the gap 550 between the porous part 520 and the second surface 511b may be formed.

According to an example embodiment, the bracket 243 may be formed inside the peripheral part 218. For example, the peripheral part 218 may have a substantially quadrangular ring shape in which an interior is empty. However, it is not limited thereto. For example, after being manufactured from a plurality of parts, the peripheral part 218 may also be manufactured as the plurality of parts are coupled. The bracket 243 may at least partially fill the empty interior of the peripheral part 218. A portion of the bracket 243 may be disposed in the recess 511. For example, a portion of the bracket 243 may be coupled to the peripheral part 218 by being included in the gap 550 between the porous part 520 disposed in the recess 511 and the recess 511, and pores of the porous part 520. For example, a portion of a second metal material 502 forming the bracket 243 may at least partially fill the gap 550 between the porous part 520 and a surface (e.g., the first surface 511a and/or the second surface 511b) that defines the recess 511 of the peripheral part 218, and at least partially fill the pores included in the porous part 520.

For example, in FIG. 5, which is a cross-sectional view of a final product, it is illustrated that the bracket 243 is included in the porous part 520, but before being coupled with the bracket 243, the porous part 520 may include pores. The bracket 243 coupled to the porous part 520 may be formed by die casting the second metal material 502 into the pores. For example, the second metal material 502 forming the bracket 243 may penetrate into the pores by die casting the second metal material 502 after the peripheral part 218 including the porous part 520 integrally formed with the recess 511 is seated in a mold for forming the bracket 243. When the second metal material 502 is sintered after die casting of the second metal material 502, as the second metal material 502 that has penetrated into the pores solidifies, the bracket 243 coupled to the peripheral part 218 may be formed. The bracket 243 may be integrally formed with the peripheral part 218 and the porous part 520.

According to an example embodiment, the bracket 243 may be integrally formed with the peripheral part 218 by being integrally formed with the surface defining the recess 511 and the porous part 520. According to an example embodiment, the bracket 243 may include a first portion 530 and a second portion 540.

For example, the first portion 530 of the bracket 243 may be a portion of the bracket 243 coupled to the peripheral part 218 by at least partially filling the gap 550 between the porous part 520 and the surface defining the recess 511. The second metal material 502 may penetrate into the gap 550 by the die casting. As the second metal material 502 that has penetrated into the gap 550 solidifies, the first portion 530 of the bracket 243 included in the gap 550 may be formed. The first portion 530 of the bracket 243 may couple the bracket 243 to the peripheral part 218 by being coupled to the recess 511.

For example, the second portion 540 of the bracket 243 may be a portion of the bracket 243 coupled to the peripheral part 218 by at least partially filling the pores included in the porous part 520. The second metal material 502 may penetrate into the pores formed in the porous part 520 by the die casting. As the second metal material 502 that has penetrated into the pores solidifies, the second portion 540 of the bracket 243 included in the pores may be formed. The second portion 540 of the bracket 243 may couple the bracket 243 to the peripheral part 218 by being coupled to the porous part 520 integrally formed with the recess 511.

According to an example embodiment, the bracket 243 may be coupled to the peripheral part 218 through the first portion 530 and the second portion 540. For example, the first portion 530 may provide a primary coupling by being included in the gap 550, and the second portion 540 may provide a secondary coupling by being included in the pores of the porous part 520.

According to an example embodiment, the body 510 of the peripheral part 218 may not substantially include pores, and the porous part 520 disposed in the recess 511 may include pores. Since the body 510 exposed to the outside may have a relatively uniform and smooth surface, it may have high strength and excellent surface characteristics. The porous part 520 may include pores filled with the second metal material 502. Since the porous part 520 is not exposed to the outside by being disposed in the recess 511, it may not affect rigidity of the electronic device 101. The porous part 520 may provide a rigid coupling between the bracket 243 and the peripheral part 218. The bracket 243 may be formed by die casting the second metal material 502 into the pores. As the second metal material 502 penetrates into the pores of the porous part 520, fills the pores, and solidifies, a portion of the bracket 243 may be included in the porous part 520. For the coupling between the bracket 243 and the peripheral part 218, even though a separate concavo-convex portion is not formed in the peripheral part 218, the bracket 243 may be firmly coupled to the peripheral part 218 by the second metal material 502 that has penetrated into the pores. According to an example embodiment, the electronic device 101 having high coupling strength between the peripheral part 218 and the bracket 243 may be provided.

According to an example embodiment, the bracket 243 may not be substantially included in the body 510. The second metal material 502 may penetrate into the pores formed in the porous part 520, but may not be included in the body 510 since the pores are not substantially formed in the body 510. Since the body 510 and the porous part 520 include the same first metal material 501, physical and chemical characteristics of an interface between the body 510 and the porous part 520 may be substantially the same. Even though there is no separate processing process for coupling the body 510 and the porous part 520, the body 510 and the porous part 520 may be coupled by a high coupling force. In a case of the first metal material 501 and the second metal material 502, which are heterogeneous metals, since they have different physical and chemical characteristics, it may be difficult to have a high coupling force. According to an example embodiment, as the second metal material 502 penetrates into the gap 550 between the porous part 520 and the recess 511 and the pores of the porous part 520, the bracket 243 may be firmly coupled to the peripheral part 218. Through the structure, since the bracket 243 and the peripheral part 218 may have high coupling strength, rigidity of the electronic device 101 may be improved. For example, coupling strength between the peripheral part 218 and the bracket 243 may be approximately at least 10 Mpa or more.

Hereinafter, a process of manufacturing the peripheral part 218 and the bracket 243 of the structure illustrated in FIG. 5 is described.

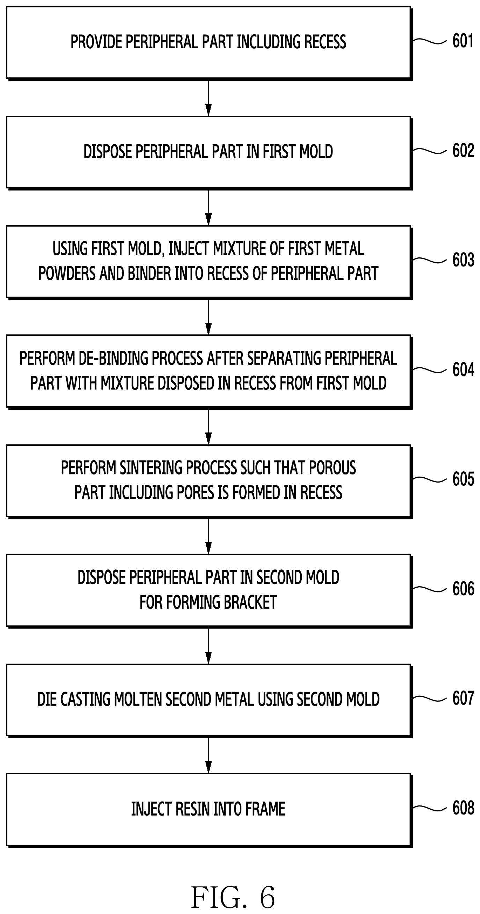

FIG. 6 is a flow chart illustrating an example of a process of manufacturing a frame.

Operations described in FIG. 6 may be referred to as a manufacturing method for manufacturing a housing assembly 210 of the above-described electronic device 101. The above-described electronic device 101 has been described as an electronic device including the bar-type housing assembly 210, but is not limited thereto. For example, the housing assembly 210 manufactured by the manufacturing method of FIG. 6 may also be referred to as a manufacturing method for manufacturing not only the bar-type housing assembly 210, but also a foldable-type housing or a rollable-type housing. Each operation to be described later may indicate a process of manufacturing the housing assembly 210 of the electronic device 101, and may be referred to as a step or a process.

Referring to FIG. 6, in operation 601, a peripheral part (e.g., the peripheral part 218 of FIG. 5) including a recess (e.g., the recess 511 of FIG. 5) may be provided.

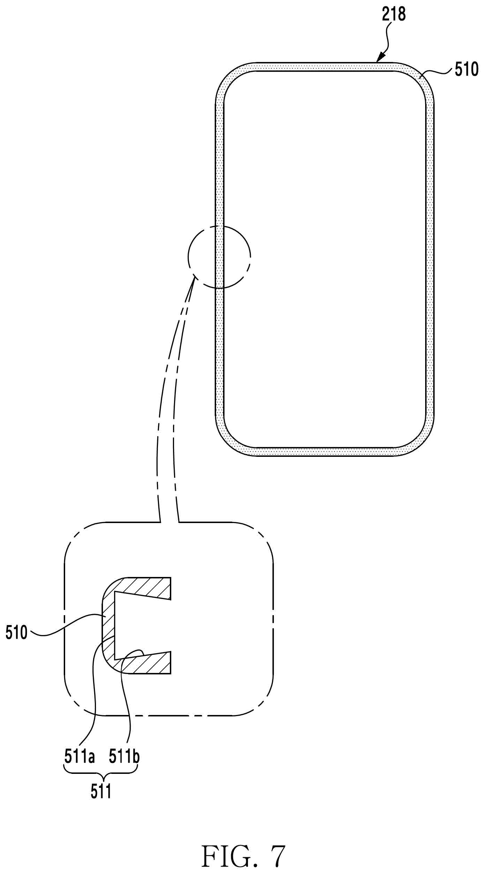

FIG. 7 illustrates a body of a peripheral part.

Referring to FIG. 7, a body 510 having an overall structure of a peripheral part 218 may be manufactured. The body 510 may be manufactured by metal injection molding a mixture of first metal powders and binder into a mold corresponding to a shape of the peripheral part 218. For example, the mold may be a mold in which a recess 511 may be formed on an inner surface of the body 510 with a substantially quadrangular ring shape when metal injection molding the first metal powders. However, it is not limited thereto. For example, after the bar-shaped body 510 is manufactured, the body 510 of the peripheral part 218 may also be manufactured by forming the recess 511 on the inner surface of the body 510 through CNC processing and bending the bar-shaped body 510. The recess 511 may be formed along a periphery of the inner surface of the body 510. A form of the recess 511 may vary. As described above, the form of the recess 511 may include an undercut form, but is not limited thereto. As described above, the recess 511 may include a first surface 511a and a second surface 511b. In a final product, a portion of the body 510 exposed to the outside may be referred to as an outer portion, and a portion of the body 510 not exposed to the outside may be referred to as an inner portion.

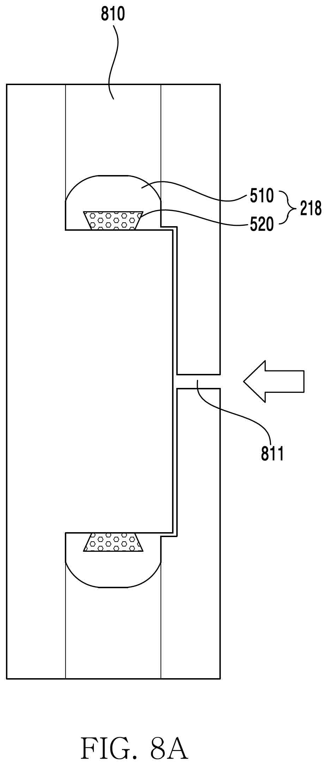

Referring back to FIG. 6, in operation 602, the peripheral part may be disposed in a first mold (e.g., a first mold 810 of FIG. 8A).

In operation 603, using the first mold 810, a mixture of first metal powders and binder may be injected into the recess 511 of the peripheral part 218.

FIG. 8A illustrates a first mold for forming a porous part.

Referring to FIG. 8A, the first mold 810 may be a mold including a cavity 811 corresponding to a shape of a porous part 520 disposed in the recess 511. The first mold 810 illustrated in FIG. 8A is merely a mold schematically illustrated to describe a manufacturing method, and an embodiment is not limited to the drawing illustrated in FIG. 8A. In order to form the porous part 520, the body 510 of the peripheral part 218 may be seated in the first mold 810. In order to form the porous part 520, first metal powders and binder may be mixed. By mixing the first metal powders and the binder, a raw material to be injected into the first mold 810 may be provided. Content of the binder injected into the first mold 810 may be approximately 15 wt% to approximately 40 wt% with respect to the raw material injected into the first mold 810, but is not limited thereto. The binder may include polyethylene (PE), polypropylene (PP), stearic acid, or a mixed resin, but is not limited thereto. As described above, a first metal material may comprise titanium. As a mixture of titanium powders and binder is injected into the cavity 811 of the first mold 810, the porous part 520 may be formed. The titanium powders and the binder may be evenly spread out in the cavity 811.

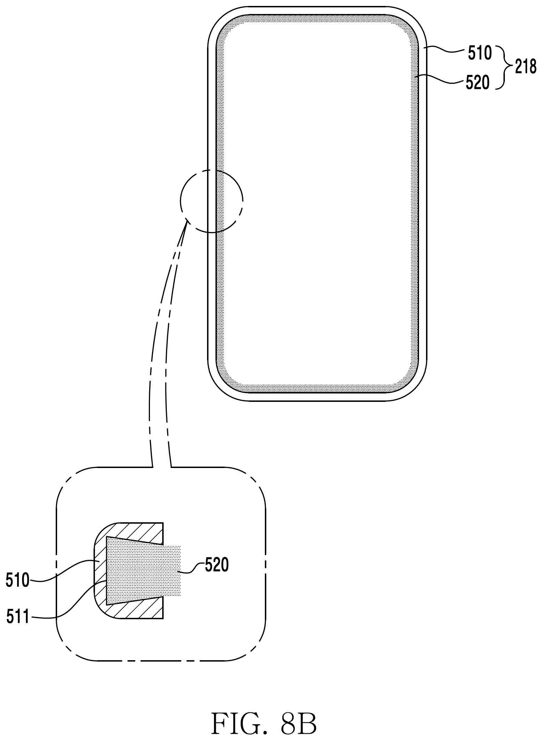

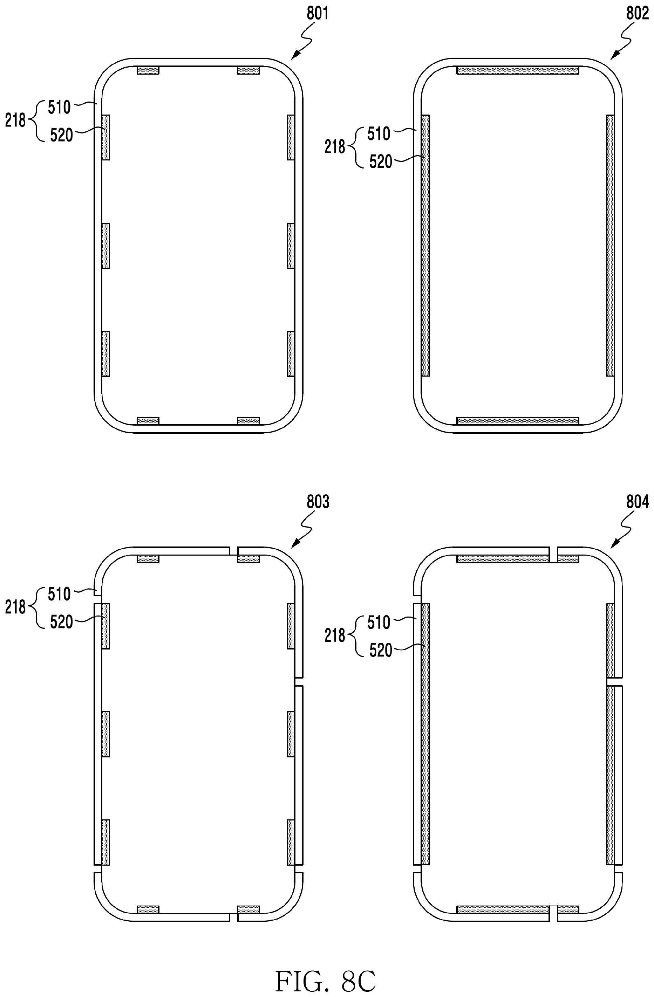

FIGS. 8B and 8C illustrate peripheral parts including a porous part metal injection molded using a first mold.

Referring to FIG. 8B, the porous part 520 may be formed in the recess 511 by the metal injection molding of the first metal powders. As the first metal powders are bonded by the binder, a shape of the porous part 520 may be formed. For example, in a case that the recess 511 is formed along the periphery of the inner surface of the body 510, the porous part 520 may be formed in the recess 511 formed along the periphery. The porous part 520 may be formed along the inner surface of the body 510. In a state of being metal injection molded by the first mold 810, the porous part 520 may fill the recess 511. According to an example embodiment, the binder may remain in the porous part 520 before a de-binding process and a sintering process are performed. An inside of the peripheral part 218 may be empty, by the body 510 having a substantially quadrangular ring shape and the porous part 520 formed along the periphery of the inner surface of the body 510. The peripheral part 218 in which the porous part 520 is formed may be separated from the first mold 810. A ratio of the binder in the mixture may have a ratio with respect to the first metal powders to form pores of the porous part 520.

Referring to FIG. 8C, the body 510 and the porous part 520 may include a plurality of parts. For example, referring to a first example 801 of FIG. 8C, the body 510 may include one part, and the porous part 520 may include a plurality of parts. For example, the porous part 520 may be disposed on a portion of the inner surface of the body 510. For example, referring to a second example 802 of FIG. 8C, the body 510 may include one part, and the porous part 520 may include a plurality of parts. The plurality of parts of the porous part 520 may extend along a portion of the periphery of the body 510. The plurality of parts of the porous part 520 may be spaced apart from each other. Each of the plurality of parts of the porous part 520 may be formed through a de-binding process and a sintering process after injection molding the first metal material. According to an embodiment, the body 510 may include a plurality of parts, and the porous part 520 may include a plurality of parts. For example, referring to a third example 803 and a fourth example 804 of FIG. 8C, each of the plurality of parts of the body 510 may be spaced apart from each other. The plurality of parts of the porous part 520 may be coupled to each of the plurality of parts of the body 510. In addition to the examples 801, 802, 803, and 804 illustrated in FIG. 8C, various embodiments may be probable.

Referring back to FIG. 6, in operation 604, a de-binding process may be performed after separating the peripheral part with the mixture disposed in the recess from the first mold.

According to an embodiment, a de-binding process may be performed after separating the peripheral part 218 from the first mold 810. The peripheral part 218 may have the mixture included in the recess 511. The de-binding process is a process of vaporizing a binder by applying high-temperature heat for approximately 3 hours to approximately 20 hours. According to an example embodiment, the de-binding process may include a primary de-binding process, a secondary de-binding process, and a tertiary de-binding process. The primary de-binding process may be performed at approximately 400°C. The secondary de-binding process may be performed at approximately 500°C. The tertiary de-binding process may be performed at approximately 800°C. The tertiary de-binding process may be referred to as pre-sintering. The above-described de-binding process is merely an example, and an embodiment is not limited thereto. For example, a temperature and a time of the de-binding process may be set based on a material of powders to be introduced. For example, the temperature and the time of the de-binding process may be changed according to a component of the binder and content of the binder. For example, the de-binding process may also include only the primary de-binding process and the secondary de-binding process. While the de-binding process is performed, the binder may be removed by being vaporized, and the first metal powders may be contracted. For example, while the de-binding process is performed, a volume of the first metal powders may be contracted by approximately 5% to approximately 20%. However, it is not limited thereto, and may be contracted less than approximately 5% or more than approximately 20%.

In operation 605, a sintering process may be performed such that a porous part including pores is formed in the recess.

The sintering process is a process of bonding metal powders by heating a semi-finished product (e.g., a green body). Through the sintering process, mechanical strength, durability, and corrosion resistance may be enhanced. As the first metal powders are bonded by the sintering process, first metal crystals may be formed. The sintering process may be performed at a crystallization temperature of a first metal to crystallize the first metal powders. For example, in a case that the first metal material comprises titanium, the sintering process may be performed at approximately 1,000°C. The temperature may vary according to a grade of titanium and/or content of a binder, and is not limited to the above-described crystallization temperature. According to an example embodiment, a time for which the sintering process is performed may be set to a time required to crystallize the first metal powders. While the sintering process is performed, a volume of the first metal powders may be contracted by, for example, approximately 5% to 15%. However, it is not limited thereto, and may remain less than approximately 5% or more than approximately 20%. The first metal powders may be finally contracted by approximately 10% to approximately 30% by the de-binding process and the sintering process. However, it is not limited thereto. Based on a composition of the metal powders, a grade of the metal powders, and the metal injection molding process, a contraction rate may also be changed. Numerical ranges described in the present disclosure are merely examples, and embodiments are not limited thereto.

FIG. 9 illustrates a peripheral part in a process in which a de-binding process and a sintering process are performed after forming a porous part.

Referring to FIG. 9, in order to form the porous part 520, a gap 550 may be formed between the porous part 520 and the recess 511 as a post-treatment process (e.g., the de-binding process and the sintering process) is performed after metal injection molding the first metal material.

A first structure 901 of FIG. 9 indicates the peripheral part 218 before the first metal material for forming the porous part 520 is metal injection molded. Referring to the first structure 901 of FIG. 9, the peripheral part 218 may include the recess 511. For example, the recess 511 may be formed by removing a portion of the body 510. The recess 511 may include the first surface 511a and the second surface 511b. As described above, when the recess 511 is viewed from above, the first surface 511a may form a bottom surface of the recess 511, and the second surface 511b may form a lateral side extending from the recess 511. For example, the recess 511 may be formed by rolling and extruding the bar-shaped body 510 including the first metal material.

A second structure 902 of FIG. 9 indicates the peripheral part 218 into which the first metal material for forming the porous part 520 is injected. Referring to the second structure 902 of FIG. 9, as the first metal material is injected into the recess 511, the porous part 520 may be formed. As the first metal powders are bonded by the binder, a shape of the porous part 520 may be maintained. The porous part 520 before going through the post-treatment process may fill the recess 511.

A third structure 903 of FIG. 9 indicates the peripheral part 218 after the de-binding process and the sintering process are performed. Referring to the third structure 903 of FIG. 9, as the de-binding process and the sintering process are performed, the binder included in the porous part 520 may be removed by being vaporized. As the binder is removed and the first metal powders are contracted, the first metal crystals may be formed. When the first metal powders are contracted, a portion of a space occupied by the binder may become empty. Pores 910 may be formed in the porous part 520 by the empty space. As described later, when die casting the second metal material, as the second metal penetrates into the pores 910, a second portion 540 of the bracket 243 may be included in the porous part 520.

According to an example embodiment, the gap 550 may be formed between the recess 511 and the porous part 520 by the contraction of the first metal powders. For example, in a case of the second structure 902, the porous part 520 may substantially fill the recess 511. As the de-binding process and the sintering process are performed, a volume of the porous part 520 may be reduced as the first metal powders are contracted. Even though the de-binding process and the sintering process are performed, since a volume of the recess 511 does not change substantially and only a volume of the porous part 520 is reduced, the gap 550 may be formed between the porous part 520 and the recess 511. As described later, when die casting the second metal material, a first portion 530 may be included in the gap 550 as the second metal penetrates into the gap 550 formed between the porous part 520 and the recess 511.

A form of the gap 550 may be different according to a gravity direction. For example, as illustrated in FIG. 9, in a case that the gravity direction is perpendicular to the first surface 511a, the first metal powders may be contracted in a state of contacting the first surface 511a. As the first metal powders are contracted in the state of contacting the first surface 511a, the porous part 520 of the third structure 903 may contact a portion of the first surface 511a and may be entirely spaced apart from the second surface 511b. The gap 550 may be formed between the porous part 520 and the second surface 511b. However, it is not limited thereto. Another form of the gap 550 will be described later.

Referring back to FIG. 6, in operation 606, the peripheral part 218 may be disposed in a second mold 1010 for forming the bracket 243.

In operation 607, the bracket 243 may be formed by die casting a molten second metal using the second mold 1010. The peripheral part 218 disposed in the second mold 1010 may have the porous part 520. Through the die casting, the bracket 243 including the first portion 530 included in the gap 550 and the second portion 540 included in the pores may be formed.

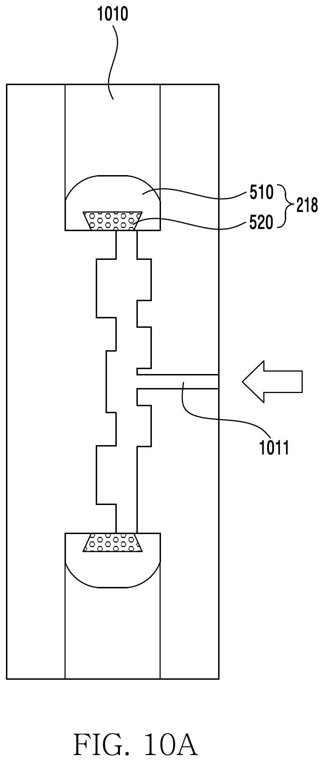

FIG. 10A illustrates a second mold for forming a bracket.

According to an embodiment, the bracket 243 may be formed inside the peripheral part 218 by die casting of second metal.

Referring to FIG. 10A, in order to form the bracket 243, the peripheral part 218 may be seated in the second mold 1010. The second mold 1010 may include a cavity 1011 corresponding to a shape of the bracket 243. The second mold 1010 illustrated in FIG. 10A is merely a mold schematically illustrated to describe a manufacturing method, and an embodiment is not limited to the drawing illustrated in FIG. 10A. In order to die cast the second metal material, molten second metal may be provided by melting the second metal material at a high temperature. For example, in a case that the second metal material is aluminum, as the aluminum is melted in a melting furnace, molten aluminum metal may be provided. The molten second metal in which the second metal material is melted may be injected into the cavity 1011 of the second mold 1010 corresponding to the shape of the bracket 243. The molten second metal may penetrate into the gap 550 between the porous part 520 and the recess 511, and the pores of the porous part 520. In a case of the body 510, since it does not include pores, the molten second metal may not penetrate inside the body 510.

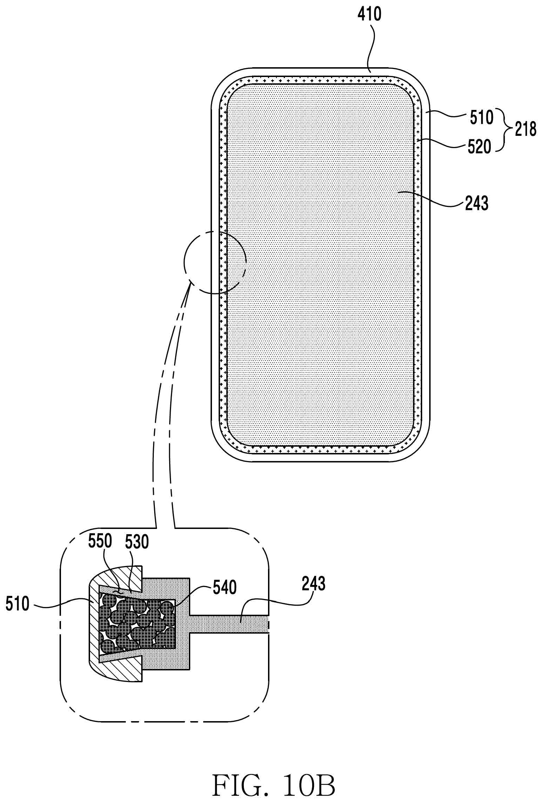

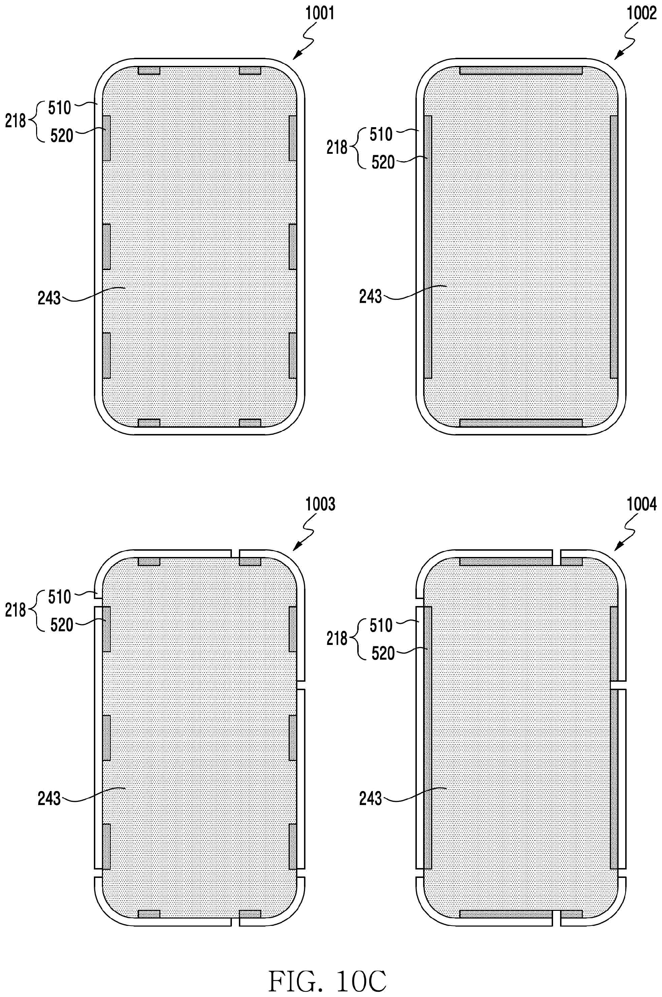

FIGS. 10B and 10C illustrate frames including a bracket formed using a second mold.

Referring to FIG. 10B, the bracket 243 may be formed, as a cooling process is performed after the injection of the molten second metal is completed. As the cooling process is performed in a state in which the molten second metal penetrates into the gap 550 and the pores (e.g., the pores 910 of FIG. 9), a portion of the bracket 243 may be included in the gap 550 and the porous part 520. The bracket 243 may be formed by separating a casting of the second metal material solidified by the cooling process from the second mold 1010, and then removing residues and polishing a surface. As a portion of the bracket 243 is included in the gap 550 and the porous part 520, the bracket 243 may be coupled to an inner side of the peripheral part 218. The bracket 243 may be manufactured in a form at least partially surrounded by the peripheral part 218.

According to an example embodiment, the bracket 243 may include the first portion 530 and the second portion 540. The first portion 530 may be formed, as the second metal material that has penetrated into the gap 550 formed between the porous part 520 and the recess 511 is cooled. The second portion 540 may be formed, as the second metal material that has penetrated into the pores in the porous part 520 is cooled. The first portion 530 may be coupled to the gap 550, and the second portion 540 may be coupled to the porous part 520. The bracket 243 may be firmly coupled to the peripheral part 218 through the first portion 530 and the second portion 540.

Referring to FIG. 10C, the body 510 may include one part, and the porous part 520 may include a plurality of parts. Referring to a first example 1001 and a second example 1002 of FIG. 10C, the body 510 may include one part, and the porous part 520 may include a plurality of parts. The bracket 243 may be coupled to the peripheral part 218 by being coupled to each of the plurality of parts of the porous part 520. Referring to a third example 1003 and a fourth example 1004 of FIG. 10C, the body 510 may include a plurality of parts, and the porous part 520 may include a plurality of parts. The bracket 243 may be coupled to the peripheral part 218 by being coupled to each of the plurality of parts of the porous part 520. For example, when the molten second metal is die-casted, the bracket 243 coupled to the peripheral part 218 may be formed, as the second metal material is inserted into pores in the plurality of parts of the porous part 520.

Referring back to FIG. 6, in operation 608, a resin may be injected into the peripheral part 218.

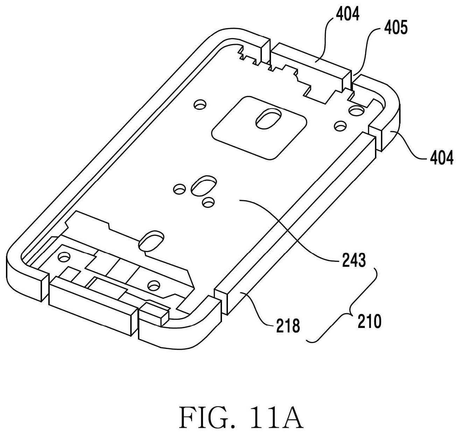

FIG. 11A illustrates a housing assembly in which a frame and a bracket are formed.

Referring to FIG. 11A, as described above, a peripheral part 218 may include a slot (or a slit). In a case that the peripheral part 218 is entirely filled with a first metal material, which is a conductive material, since a resonant frequency of a signal radiated or received through one or more conductive portions of the peripheral part 218 may not be adjusted, it may be difficult to use the one or more conductive portions as an antenna radiator. As the slot (or the slit) is formed in the peripheral part 218, an electrical length of the one or more conductive portions may be adjusted. Since the electrical length of the one or more conductive portions may determine frequency characteristics of a signal transmitted and/or received through an antenna radiator, the one or more conductive portions may be used as an antenna radiator for transmitting and/or receiving a signal on a designated frequency band.

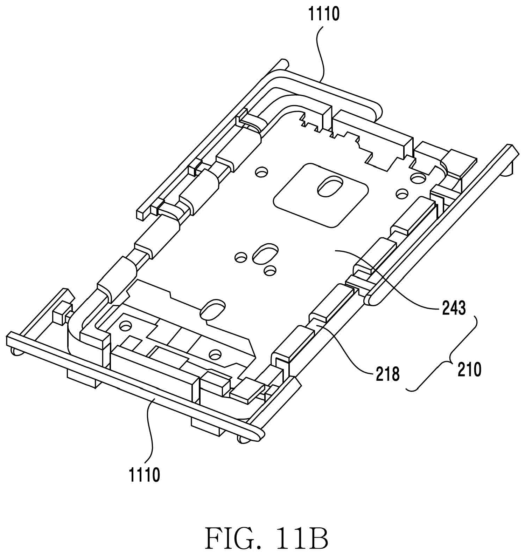

FIG. 11B illustrates a housing assembly in which a resin is injected into a frame.

Referring to FIG. 11B, a resin 1110 may be injected to fill the slot (or the slit) of the peripheral part 218. As the resin 1110, which is a non-conductive material, fills at least a portion of the slot (or the slit), a segmental structure including one or more conductive portions 404 and one or more non-conductive portions may be formed on a lateral side of a housing assembly 210. The segmental structure may operate as an antenna radiator for communication with an external electronic device. For example, a wireless communication module (e.g., the wireless communication module 192 of FIG. 1) may be configured to transmit or receive a signal on a designated band using the one or more conductive portions that form a portion of the lateral side of the housing assembly 210.

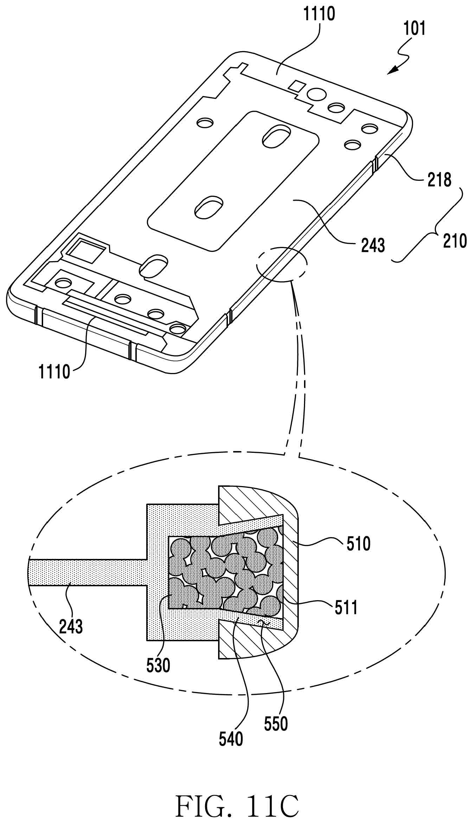

FIG. 11C illustrates a housing assembly of a final product obtained by processing a shape of the housing assembly of FIG. 11B.

Referring to FIG. 11C, the resin 1110 may fill at least a portion of an empty space between the peripheral part 218 and a bracket 243. After the resin 1110 is injected, as processing (e.g., cutting processing) is performed into a form of a final product, the housing assembly 210 may be provided. For example, the resin 1110 may include polybutyleneterephthalate (PBT) having excellent electrical characteristics and flame retardancy, but is not limited thereto. For example, the resin 1110 may include polycarbonate (PC) and/or polyphthalamide (PPA). The housing assembly 210 used in a final product may be formed, as a cover plate (e.g., the cover plate 202 of FIG. 3) and a rear cover (e.g., the rear cover 211 of FIG. 3) are coupled to the housing assembly 210 illustrated in FIG. 11C.

According to an example embodiment, the housing assembly 210 may include the peripheral part 218 and the bracket 243. The peripheral part 218 may include a body 510 and a porous part 520. For example, the body 510 may at least partially form an outer surface of the peripheral part 218. The body 510 may include the first metal material having high strength and excellent surface characteristics. Since the body 510 is difficult to be damaged by an external impact, it may improve strength of an electronic device 101. The porous part 520 may be formed by metal injection molding the first metal material in a recess 511 formed in an inner side of the body 510. The porous part 520 may be formed by being metal injection molded in the recess 511. In the porous part 520, a gap 550 and pores may be formed through a de-binding process and a sintering process. In order to form the bracket 243, a second metal material may be die-casted. As the second metal material penetrates into the gap 550 and the pores, the bracket 243 may be firmly coupled to the peripheral part 218. The exemplary electronic device 101 may have a coupling structure of the peripheral part 218 and the bracket 243 according to solidification of the second metal material that has penetrated into the gap 550 and the pores. According to an example embodiment, the bracket 243 may be coupled to the peripheral part 218 through a first portion 530 and a second portion 540. Since the above-described manufacturing method may improve a coupling force between the peripheral part 218 and the bracket 243, and may reduce an unnecessary process, it may reduce manufacturing cost.

According to an example embodiment, the peripheral part 218 and the bracket 243 may include different metal materials. The peripheral part 218 exposed to the outside of the electronic device 101 may include the first metal material (e.g., titanium) having relatively high strength for rigidity of the electronic device 101. The bracket 243 disposed inside the electronic device 101 and not exposed to the outside may include the second metal material (e.g., aluminum) having relatively low specific gravity for weight lightening of the electronic device 101. The exemplary electronic device 101 may achieve weight lightening while having high rigidity.

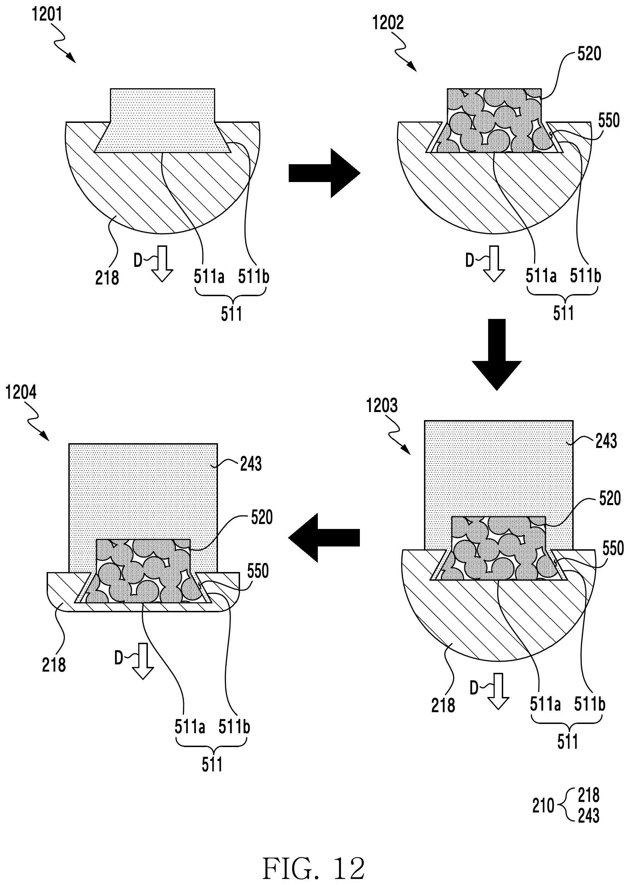

FIG. 12 illustrates a manufacturing process of a frame manufactured in a state in which a first surface of a recess is positioned perpendicular to a gravity direction.

Referring to FIG. 12, a gap 550 between a porous part 520 and a recess 511 may be substantially uniformly formed. According to an example embodiment, a form of the gap 550 may be different according to a relative positional relationship between a first surface 511a of the recess 511 that the porous part 520 contacts, and the gravity direction (e.g., a direction D of FIG. 12).

A first structure 1201 of FIG. 12 indicates a peripheral part 218 in which a first metal material for forming the porous part 520 is injected into the recess 511. A second structure 1202 of FIG. 12 indicates the peripheral part 218 after a de-binding process and a sintering process are performed. A third structure 1203 of FIG. 12 indicates the peripheral part 218 to which a bracket 243 is coupled. A fourth structure 1204 of FIG. 12 indicates the peripheral part 218 in a state in which processing is completed.

Referring to the first structure 1201 of FIG. 12, as the first metal material is injected into the recess 511, the porous part 520 may be formed. As first metal powders are bonded by a binder, a shape of the porous part 520 may be maintained. The porous part 520 before going through a post-treatment process may fill the recess 511.

According to an example embodiment, a housing assembly 210 may be manufactured in a state in which the first surface 511a of the recess 511 is positioned to be perpendicular to the gravity direction. As illustrated in FIG. 12, in a case that the gravity direction is perpendicular to the first surface 511a, the first metal powders may be contracted in a state of contacting the first surface 511a. Since the gravity is perpendicular to the first surface 511a, the porous part 520 may maintain the state of contacting the first surface 511a by the gravity and may be spaced apart from a second surface 511b. As the first metal powders are contracted in the state of contacting the first surface 511a, the porous part 520 of the second structure 1202 may contact a portion of the first surface 511a and may be substantially uniformly spaced apart from the second surface 511b. With respect to the second surface 511b spaced apart from the porous part 520 and surrounding the porous part 520, the porous part 520 may be symmetrically disposed. The gap 550 may be formed between the porous part 520 and the entire second surface 511b.

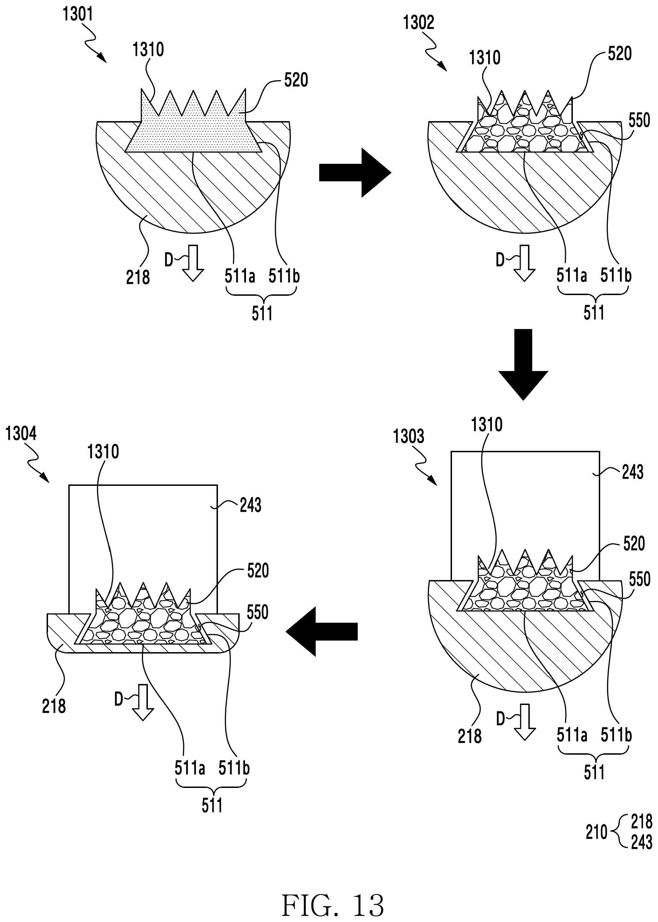

FIG. 13 illustrates a manufacturing process of a frame in which a porous part is manufactured to have roughness in a state in which a first surface of a recess is positioned perpendicular to a gravity direction.

Referring to FIG. 13, a porous part 520 may include a concavo-convex portion 1310 formed on a surface of the porous part 520 facing an inner side of a peripheral part 218. The concavo-convex portion 1310 may be formed by adjusting roughness of the surface of the porous part 520.

A first structure 1301 of FIG. 13 indicates the peripheral part 218 in which a first metal material for forming the porous part 520 is injected into a recess 511. A second structure 1302 of FIG. 13 indicates the peripheral part 218 after a de-binding process and a sintering process are performed. A third structure 1303 of FIG. 13 indicates the peripheral part 218 to which a bracket 243 is coupled. A fourth structure 1304 of FIG. 13 indicates the peripheral part 218 in a state in which processing is completed.

Referring to the first structure 1301 of FIG. 13, as the first metal material is injected into the recess 511, the porous part 520 may be formed. As first metal powders are bonded by a binder, a shape of the porous part 520 may be maintained. The shape of the porous part 520 may be based on a shape of a cavity (e.g., the cavity 811 of FIG. 8A) of a first mold (e.g., the first mold 810 of FIG. 8A) for injecting the first metal material. The cavity may have a shape capable of forming the concavo-convex portion 1310. The porous part 520 injected by the cavity may include an concavo-convex portion 1310 on the surface facing the inner side of the peripheral part 218. Referring to the second structure 1302 of FIG. 13, after the de-binding process and the sintering process are performed, as the concavo-convex portion 1310 is maintained, the porous part 520 may include the concavo-convex portion 1310. As described above, since the gravity direction (e.g., a direction D of FIG. 13) is perpendicular to a first surface 511a, as the first metal powders are contracted, the porous part 520 may be spaced apart from an entire second surface 511b. Referring to the third structure 1303 of FIG. 13, when a second metal material is die-casted, the concavo-convex portion 1310 may be positioned inside the bracket 243. Since the concavo-convex portion 1310 may increase a contact area of the porous part 520 in contact with the bracket 243, a coupling area between the bracket 243 and the porous part 520 may be increased. As the bracket 243 and the porous part 520 are in contact with each other over a larger area, a coupling force between the bracket 243 and the peripheral part 218 may be increased. According to an example embodiment, coupling strength between the bracket 243 and the peripheral part 218 may be improved by the concavo-convex portion 1310.

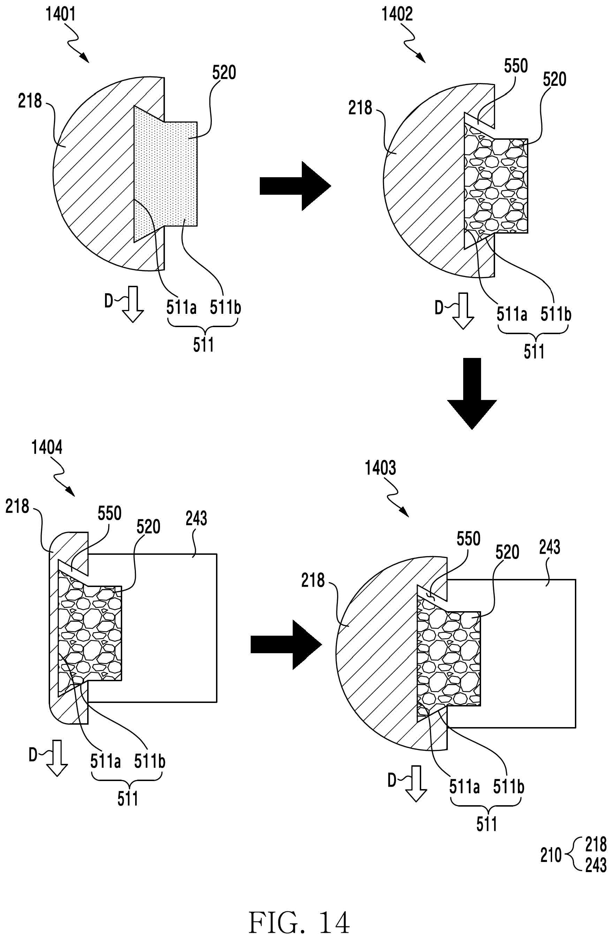

FIG. 14 illustrates a manufacturing process of a frame manufactured in a state in which a first surface of a recess is positioned parallel to a gravity direction.

Referring to FIG. 14, a gap 550 between a porous part 520 and a recess 511 may be formed substantially non-uniformly. According to an example embodiment, a form of the gap 550 may be different according to a relative positional relationship between a first surface 511a of the recess 511 that the porous part 520 contacts, and the gravity direction (e.g., a direction D of FIG. 14).

A first structure 1401 of FIG. 14 indicates a peripheral part 218 in which a first metal material for forming the porous part 520 is injected into the recess 511. A second structure 1402 of FIG. 14 indicates the peripheral part 218 after a de-binding process and a sintering process are performed. A third structure 1403 of FIG. 14 indicates the peripheral part 218 to which the bracket 243 is coupled. A fourth structure 1404 of FIG. 14 indicates the peripheral part 218 in a state in which processing is completed.

Referring to the first structure 1401 of FIG. 14, as the first metal material is injected into the recess 511, the porous part 520 may be formed. As first metal powders are bonded by a binder, a shape of the porous part 520 may be maintained. The porous part 520 before going through a post-treatment process may fill the recess 511.

According to an example embodiment, a housing assembly 210 may be manufactured in a state in which the first surface 511a of the recess 511 is positioned to be parallel to the gravity direction. As illustrated in FIG. 14, in a case that the gravity direction is parallel to the first surface 511a, the first metal powders may be contracted in a state of contacting the first surface 511a and a portion of a second surface 511b by gravity. When the first metal powders are contracted, the first metal powders may maintain a state of contacting a portion of the first surface 511a and a portion of the second surface 511b corresponding to the gravity direction, and may be spaced apart from a remaining portion of the second surface 511b opposite to the gravity direction. As the first metal powders are contracted in a state of contacting a portion of the second surface 511b, the porous part 520 of the second structure 1402 may contact a portion of the second surface 511b facing the gravity direction and may be spaced apart from a remaining portion of the second surface 511b. The porous part 520 may be disposed asymmetrically with respect to the second surface 511b. The gap 550 may be formed between the porous part 520 and the remaining portion of the second surface 511b.

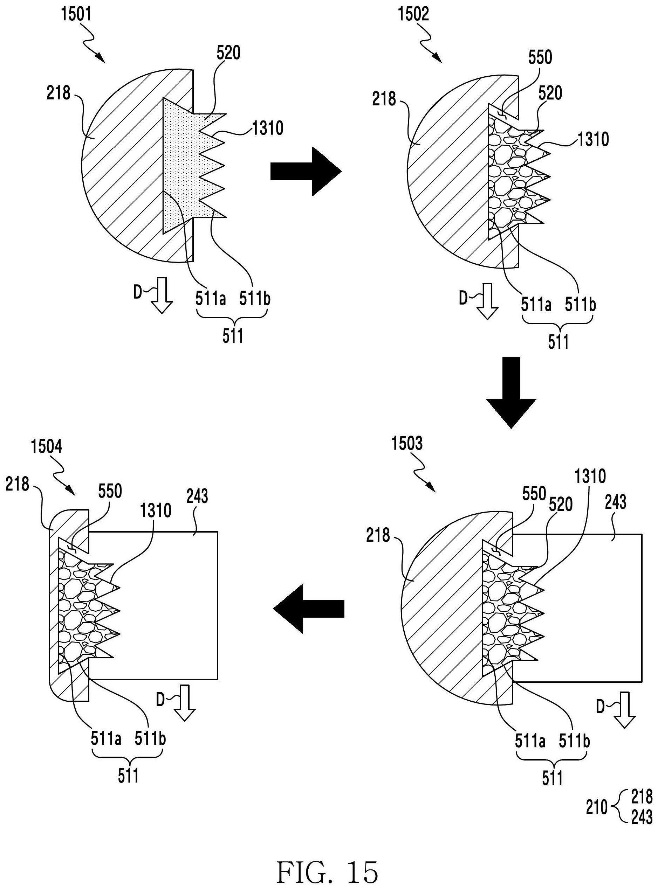

FIG. 15 illustrates a manufacturing process of a frame in which a porous part is manufactured to have roughness in a state in which a first surface of a recess is positioned parallel to a gravity direction.

Referring to FIG. 15, a porous part 520 may include a concavo-convex portion 1310 formed on a surface of the porous part 520 facing an inner side of a peripheral part 218. The concavo-convex portion 1310 may be formed by adjusting roughness of the surface of the porous part 520.

A first structure 1501 of FIG. 15 indicates the peripheral part 218 in which a first metal material for forming the porous part 520 is injected into a recess 511. A second structure 1502 of FIG. 15 indicates the peripheral part 218 after a de-binding process and a sintering process are performed. A third structure 1503 of FIG. 15 indicates the peripheral part 218 to which a bracket 243 is coupled. A fourth structure 1504 of FIG. 15 indicates the peripheral part 218 in a state in which processing is completed.

Referring to the first structure 1501 of FIG. 15, as the first metal material is injected into the recess 511, the porous part 520 may be formed. As first metal powders are bonded by a binder, a shape of the porous part 520 may be maintained. The shape of the porous part 520 may be based on a shape of a cavity (e.g., the cavity 811 of FIG. 8A) of a first mold (e.g., the first mold 810 of FIG. 8A) for injecting the first metal material. The cavity may have a shape capable of forming the concavo-convex portion 1310. The porous part 520 injected by the cavity may include the concavo-convex portion 1310 on the surface facing the inner side of the peripheral part 218. Referring to the second structure 1502 of FIG. 15, after the de-binding process and the sintering process are performed, the porous part 520 may include the concavo-convex portion 1310, as the concavo-convex portion 1310 is maintained. As described above, since the gravity direction (e.g., a gravity direction D of FIG. 15) is parallel to a first surface 511a, as the first metal powders are contracted, the porous part 520 may contact a portion of the second surface 511b and may be spaced apart from a remaining portion of the second surface 511b. Referring to the third structure 1503 of FIG. 15, when the second metal material is die-casted, the concavo-convex portion 1310 may be positioned inside the bracket 243. Since the concavo-convex portion 1310 may increase a contact area of the porous part 520 in contact with the bracket 243, a coupling area between the bracket 243 and the porous part 520 may be increased. As the bracket 243 and the porous part 520 are in contact with each other over a larger area, a coupling force between the bracket 243 and the peripheral part 218 may be increased. According to an example embodiment, coupling strength between the bracket 243 and the peripheral part 218 may be improved by the concavo-convex portion 1310.

An electronic device 101 is disclosed. The electronic device 101 may include a display 201. The electronic device 101 may include a housing assembly 210. The housing assembly 210 may include a rear cover 211, and a frame 240 attached with the rear cover 211. The frame 240 may include a peripheral part 218, formed from a first metal material, including an outer portion 218a defining a lateral side of the electronic device 101 and an inner portion 218b including a recess 511. The frame 240 may include a porous part 520 integrally formed with the recess 511 of the peripheral part 218. The frame 240 may include a bracket 243, supporting the display 201, formed from a second metal material different from the first metal material. The bracket 243 may be integrally formed with the peripheral part 218 and the porous part 520. A portion of the second metal material forming the bracket 243 may at least partially fill a gap between the porous part 520 and a surface defining the recess 511 of the peripheral part 218, and may at least partially fill pores (e.g., the pores 910 of FIG. 9) included in the porous part 520.

According to an embodiment, the first metal material may comprise titanium.

According to an embodiment, the second metal material may comprise aluminum.

According to an embodiment, the porous part 520 of the frame 240 may comprise titanium with the pores filled with aluminum.

According to an embodiment, the inner portion 218b may include a first surface 511a opposite to the lateral side and second surfaces 511b extending from the first surface 511a, and the first surface 511a and the second surfaces 511b may define the recess 511. The porous part 520 may be coupled to a portion of the first surface 511a, and may be spaced apart from a portion of the second surfaces 511b.

According to an embodiment, the porous part 520 may include a concavo-convex portion 1310 formed on a surface of the porous part 520 facing an inner side of the frame 240 opposite to a direction of the lateral side.

According to an embodiment, the first portion of the bracket 243 may couple the bracket 243 to the porous part 520, as the second metal material penetrates into the pores.

According to an embodiment, specific gravity of the second metal material may be lower than specific gravity of the first metal material.

According to an embodiment, coupling strength between the bracket 243 and the frame 240 may be 10 MPa or more.

According to an embodiment, the second metal material may be included in the porous part 520 and may be excluded in the peripheral part 218.

According to an embodiment, density of the second metal material may be lower than density of the first metal material.

A method of manufacturing a frame 240 of a housing assembly 210 for use in an electronic device 101 is disclosed. The method of manufacturing may include providing a peripheral part 218 including a recess 511. The method of manufacturing may include disposing the peripheral part 218 in a first mold 810. The method of manufacturing may include injecting, using the first mold 810, a mixture of first metal powders and binder into the recess 511 of the peripheral part 218. The method of manufacturing may include, after injecting, separating, from the first mold 810, the peripheral part 218 with the mixture disposed in the recess 511. The method of manufacturing may include, after separating, performing de-binding (debinding) to remove the binder from the mixture disposed in the recess 511. The method of manufacturing may include, after de-binding is performed, performing sintering to crystallize the first metal powders to form a porous part 520 including pores in the recess 511. A gap may be formed between the porous part 520 and a surface defining the recess 511 of the peripheral part 218 by the de-binding and the sintering. The method of manufacturing may include disposing the peripheral part 218 with the porous part 520 formed in the recess 511 in a second mold 1010. The method of manufacturing may include die casting of molten second metal, using the second mold 1010 in which the frame 240 is disposed, to form a bracket 243 that includes a first portion included in the gap and a second portion included in the pores.

According to an embodiment, a ratio of the binder in the mixture may have a ratio with respect to the first metal powders to form the pores.

According to an embodiment, the pores may be formed, as the first metal powders are contracted by the de-binding and the sintering.

According to an embodiment, the second metal material may be included in the pores, as the molten second metal penetrates into the pores and solidifies.

An electronic device 101 is disclosed. The electronic device 101 may include a display 201. The electronic device 101 may include a peripheral part 218, formed from a first metal material, at least partially forming an outer surface (e.g., a lateral side) of the electronic device 101. The electronic device 101 may include a bracket 243, supporting the display 201, formed from a second metal material, and at least partially surrounded by the peripheral part 218. The peripheral part 218 may include a body 510. The peripheral part 218 may include a recess 511 formed on an inner surface of the body 510. The peripheral part 218 may include a porous part 520, disposed in the recess 511, coupled to a portion of the recess 511, and including pores 910. The bracket 243 may include a first portion 530 coupled to the peripheral part 218, by being included in a gap 550 between the porous part 520 and the recess 511. The bracket 243 may include a second portion 540 coupled to the peripheral part 218, by being included in the pores 910 of the porous part 520.

For example, the first metal material may comprise titanium.

For example, the second metal material may comprise aluminum.

For example, the bracket 243 may be coupled to the peripheral part 218 through the first portion 530 and the second portion 540. The bracket 243 may be integrally formed with the peripheral part 218.

For example, the recess 511 may include a first surface 511a facing an inner side of the peripheral part 218. The recess 511 may include a second surface 511b extending from the first surface 511a toward the inner side. The gap 550 may be formed, as the porous part 520 contacts a portion of the first surface 511a and is spaced apart from the second surface 511b. The recess 511 may be defined by the first surface 511a and the second surface 511b.

For example, the recess 511 may include a first surface 511a facing an inner side of the peripheral part 218. The recess 511 may include a second surface 511b extending from the first surface 511a toward the inner side. The gap 550 may be formed, as the porous part 520 contacts a portion of the first surface 511a and a portion of the second surface 511b and is spaced apart from a remaining portion of the second surface 511b.

For example, the porous part 520 may include a concavo-convex portion 1310 formed on a surface of the porous part 520 facing an inner side of the peripheral part 218.

For example, the first portion 530 of the bracket 243 may couple the bracket 243 to the porous part 520, as the second metal material penetrates into the pores 910.

For example, specific gravity of the second metal material may be lower than specific gravity of the first metal material.

For example, coupling strength between the bracket 243 and the peripheral part 218 may be 10 MPa or more.

A method of manufacturing a housing assembly 210 including a peripheral part 218 and a bracket 243 is disclosed. The method of manufacturing may include providing a body 510 of the peripheral part 218 including a recess 511. The method of manufacturing may include forming a porous part 520 in the recess 511 by metal injection molding (MIM) first metal powders and a binder, using a first mold 810 to form the porous part 520. The method of manufacturing may include performing de-binding to remove the binder. The method of manufacturing may include performing sintering to crystallize the first metal powders. The method of manufacturing may include forming the bracket 243, which is coupled to the porous part 520 and the gap 550 between the recess 511 and the porous part 520, by die casting molten second metal, using a second mold 1010 to form the bracket 243. The bracket 243 may be coupled to the peripheral part 218, as the second metal material is included in the gap 550 and pores 910 of the porous part 520.

For example, the peripheral part 218 may be formed from a first metal material.

For example, the pores 910 may be formed, as the first metal powders are contracted by the de-binding and the sintering.

For example, the second metal may be included in the pores 910, as the molten second metal penetrates into the pores 910 and solidifies.

For example, the gap 550 may be formed, as the binder is removed and the first metal powders are contracted by the de-binding and the sintering.

For example, the first metal material may comprise titanium. The second metal material may comprise aluminum.

For example, specific gravity of the second metal material may be lower than specific gravity of the first metal material.

For example, the recess 511 may include a first surface 511a facing an inner side of the peripheral part 218. The recess 511 may include a second surface 511b extending from the first surface 511a toward the inner side. The gap 550 may be formed, as the porous part 520 contacts a portion of the first surface 511a and is spaced apart from the second surface 511b.

For example, the recess 511 may include a first surface 511a facing an inner side of the peripheral part 218. The recess 511 may include a second surface 511b extending from the first surface 511a toward the inner side. The gap 550 may be formed, as the porous part 520 contacts a portion of the first surface 511a and a portion of the second surface 511b and is spaced apart from a remaining portion of the second surface 511b.

For example, the method of manufacturing may further include forming a concavo-convex portion 1310 formed on a surface of the porous part 520 facing an inner side of the peripheral part 218.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a display; and
a housing assembly including:
a rear cover, and
a frame attached with the rear cover, the frame including:
a peripheral part, formed from a first metal material, including an outer portion defining a lateral side of the electronic device and an inner portion including a recess,
a porous part integrally formed with the recess of the peripheral part, and
a bracket, supporting the display, formed from a second metal material different from the first metal material, the bracket integrally formed with the peripheral part and the porous part,
wherein a portion of the second metal material, forming the bracket, at least partially fills a gap between the porous part and a surface defining the recess of the peripheral part, and at least partially fills pores included in the porous part.

2. The electronic device of claim 1,
wherein the first metal material comprises titanium.

3. The electronic device of claim 1 or 2,
wherein the second metal material comprises aluminum.

4. The electronic device of any one of claims 1 to 3,
wherein the porous part of the frame comprises titanium with the pores filled with aluminum.

5. The electronic device of any one of claims 1 to 4,
wherein the inner portion includes a first surface opposite to the lateral side and second surfaces extending from the first surface, wherein the first surface and the second surfaces define the recess, and
wherein the porous part is coupled to a portion of the first surface, and is spaced apart from a portion of the second surfaces.

6. The electronic device of any one of claims 1 to 5,
wherein the porous part includes a concavo-convex portion formed on a surface of the porous part facing an inner side of the frame opposite to a direction of the lateral side.

7. The electronic device of any one of claims 1 to 6,
wherein the first portion of the bracket couples the bracket to the porous part, as the second metal material penetrates into the pores.

8. The electronic device of any one of claims 1 to 7,
wherein specific gravity of the second metal material is lower than specific gravity of the first metal material.

9. The electronic device of any one of claims 1 to 8,
wherein coupling strength between the bracket and the frame is 10 MPa or more.

10. The electronic device of any one of claims 1 to 9,
wherein the second metal material is included in the porous part and is excluded in the peripheral part.

11. The electronic device of any one of claims 1 to 10,
wherein density of the second metal material is lower than density of the first metal material.

12. A method of manufacturing a frame of a housing assembly for use in an electronic device, the method comprising:
providing a peripheral part including a recess;
disposing the peripheral part in a first mold;
injecting, using the first mold, a mixture of first metal powders and binder into the recess of the peripheral part;
after injecting, separating, from the first mold, the peripheral part with the mixture disposed in the recess;
after separating, performing de-binding to remove the binder from the mixture disposed in the recess;
after de-binding is performed, performing sintering to crystallize the first metal powders to form a porous part including pores in the recess, and wherein a gap is formed between the porous part and a surface defining the recess of the peripheral part by the de-binding and the sintering;
disposing the peripheral part with the porous part formed in the recess in a second mold; and
die casting of molten second metal, using the second mold in which the frame is disposed, to form a bracket that comprises a first portion included in the gap and a second portion included in the pores.

13. The manufacturing method of claim 12,
wherein a ratio of the binder in the mixture has a ratio with respect to the first metal powders to form the pores.

14. The manufacturing method of claim 12 or 13,
wherein the pores are formed, as the first metal powders are contracted by the de-binding and the sintering.

15. The manufacturing method of any one of claims 12 to 14,
wherein the second metal material forming the bracket is included in the pores, as the molten second metal penetrates into the pores and solidifies.
